# EUROPEAN PATENT APPLICATION

(11) **EP 1 102 437 A1**
(43) Date of publication of application: **23.05.2001**
(21) Application number: 00929851.4
(22) Date of filing: 24.05.2000
(51) Int. Cl.: H04L 12/40, H04N 7/173

(54) **APPARATUS DATA TRANSMISSION METHOD, TRANSMISSION DEVICE, AND TRANSMISSION SYSTEM**

(30) Priority: 24.05.1999 JP 14402199; 14.09.1999 JP 26062599; 03.12.1999 JP 34535499
(71) Applicant: Sony Corporation, Tokyo 141-0001 (JP)
(72) Inventor: Sato, Makoto, Sony Corporation, Tokyo 141-0001 (JP); Sato, Naoyuki, Sony Corporation, Tokyo 141-0001 (JP); Horiguchi, Mari, Sony Corporation, Tokyo 141-0001 (JP); Shima, Hisato, Sony Corporation, Tokyo 141-0001 (JP)
(74) Representative: DeVile, Jonathan Mark
(86) International application number: JP0003331
(87) International publication number: WO0072521

(57) **Abstract**

In order to make it possible to efficiently collect data related to devices between devices connected to each other through an IEEE 1394 bus or the like, pieces of connection information which are connectable in the device are held at once as a predetermined table, and all or part of the pieces of connection information in the held table are transmitted to another device on the basis of transmission of a protocol of a predetermined format through the bus line. Otherwise, when data for designating an input unit, an output unit, and an internal function processing unit held by the device is transmitted from another device by the protocol of the predetermined format through the bus line, so that data related to the status of a connection of the input unit, output unit, and the internal function processing unit of the corresponding device is transmitted to the bus line.

## Description

### TECHNICAL FIELD

The present invention relates to a device data transmission method, a transmission apparatus and a transmission system which are preferably applied when data related to devices connected to a serial communication bus based on, e.g., the IEEE (The Institute of Electrical and Electronics Engineers) 1394 is transmitted between the devices.

### BACKGROUND ART

An AV device which can mutually transmit information through a network using an IEEE 1394 serial communication bus is developed. In this network, a predetermined command (AV/C Command Transaction Set: to be referred to as an AV/C command hereinafter) is transmitted, so that the AV device connected to the network can be controlled. The details of the AV/C command are described in AV/C Digital Interface Command Set General Specification disclosed in 1394 Trade Association.

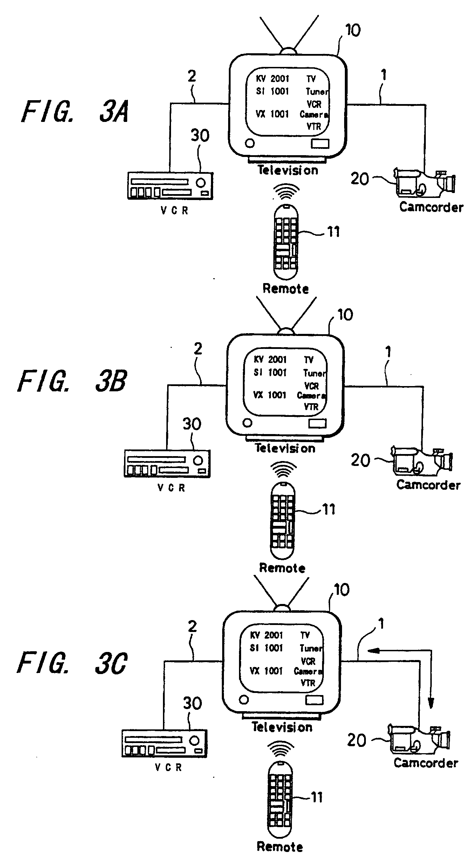

A state in which control is performed by transmission of an AV/C command between devices connected to an IEEE1394 bus is shown in FIG. 3. For example, as shown in FIG. 3A, a television receiver 100, a video camera 200, and a video cassette recorder (VCR) 300 are connected through cables 1 and 2 constituting the IEEE1394 bus. The video camera 200 also has a function of performing recording/reproducing on/from a magnetic tape or the like. A remote control device 11 attached to the television receiver 100 may control not only the television receiver 100, but also control the video camera 200 and the video cassette recorder 300 connected to the television receiver 100.

In this case, when each device corresponds to an AV/C command, the device has a storage unit called a descriptor in which the details of data related to a function included in the device are stored. When data of the descriptor is read from another device by transmission of a predetermined command, the functions of the devices connected through a bus and controls which can be performed to the devices can be determined.

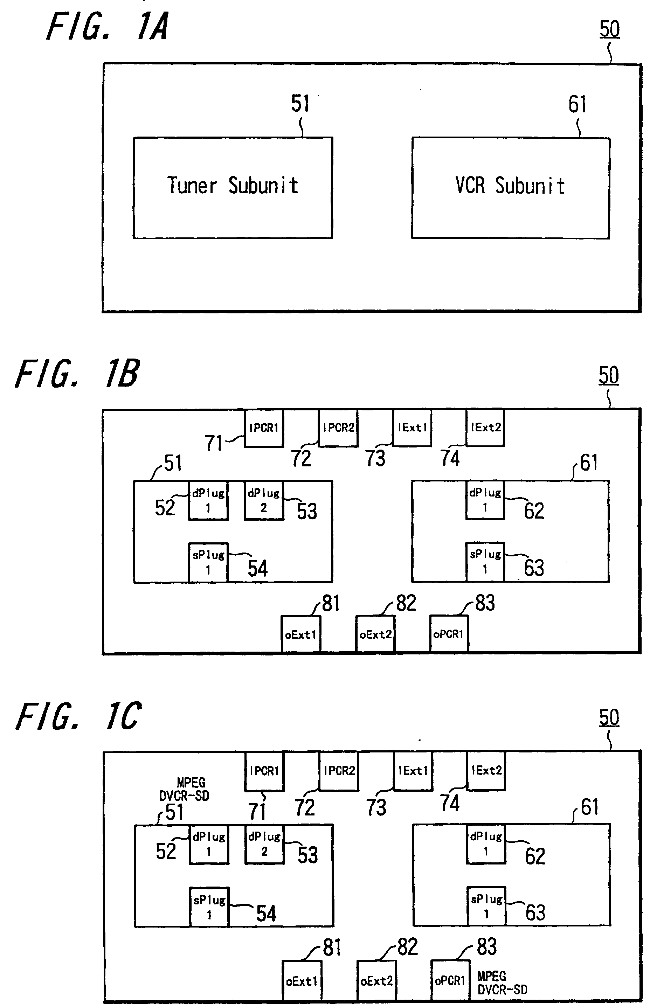

In the example in FIG. 1, the process of checking the functions of the devices connected through the bus is performed by transmission of a predetermined command from the television receiver 100. As a result, for example, as shown in FIG. 1B, the device names of the connected devices 200 and 300, the names of the functions included in the devices, and the like are displayed on the screen of the television receiver 100. As shown in FIG. 1C, in an operation of the remote control device 11 or the like, by selecting a device or a function on the display screen, a command for controlling the selected function is transmitted to a corresponding device (in this case, the video camera 200) through the bus, so that the device can be controlled. More specifically, a video image reproduced from the video camera 200, for example, is transmitted to a bus 1, and the video data is received by the television receiver 100 to form an image, or the video data is received by the video cassette recorder 300 and then recorded. These operations can be integrally controlled.

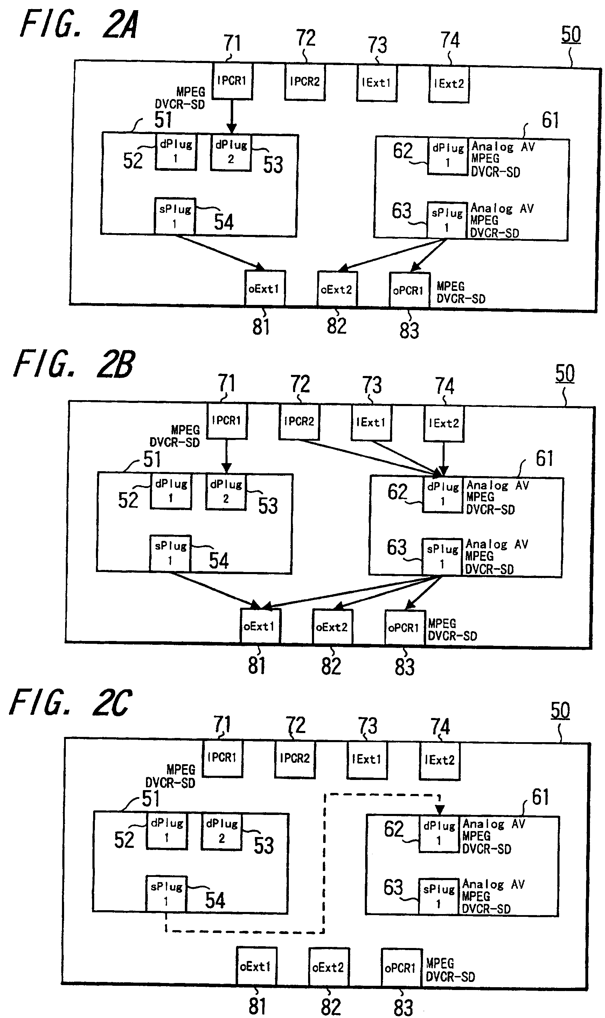

The procedure of the process of checking the functions of devices connected through a bus by a conventional AV/C command will be described below with reference to FIG. 1 and FIG. 2. In this case, it is assumed the function of a video cassette recorder (VCR) 50 connected through an IEEE1394 bus is checked by transmission of a command on the bus.

A destination device (to be referred to as a control device hereinafter) transmits a UNIT INFO status command to check the type of the device 50, and obtains a response of data related to the type of the device (UNIT). It is understood that the device 50 is a VCR unit as a whole. In order to check subunits of functional units in a unit, the control device transmits a SUBUNIT INFO status command to obtain a response of data related to the type of a SUBUNIT, and founds out that a tuner subunit 51 and a recording/reproducing subunit (VCR subunit) 61 are included. FIG. 1A is a diagram showing the state in which the unit and the subunits are understood.

A plug INFO status command (UNIT INFO status command) is transmitted to the unit to obtain a response of data related to the number of input plugs 71, 72, 73, and 74 and output plugs 81, 82, and 83 included in the device. In addition, a plug INFO status command (SUBUNIT INFO status command) for checking the plugs included in the subunits is transmitted to the subunits to obtain a response of data related to the number of input plugs 52, 53, and 62 and output plugs 54 and 63 included in the subunits 51 and 61. FIG. 1B is a diagram showing a state in which the input plugs and the output plugs are understood.

A PLUG SIGNAL FORMAT status command is transmitted to the unit to obtain a response of data related to formats handled by the plugs of the unit. FIG. 1C is a diagram showing a state in which the formats of the plugs are understood.

A CONNECTIONS status command is transmitted to the unit to check node information which is effective at present in the unit. When the device 50 does not correspond to this command, a CONNECT status command is transmitted to check connected plugs one by one. In addition, a CONNECT inquiry command is transmitted to check nodes which can be made in the unit. FIG. 2A is a diagram showing a present connection state, FIG. 2B is a diagram showing nodes which can be connected in the unit, and FIG. 2C is a diagram showing nodes which can be made between subunits.

The commands of the respective states are transmitted as described above to obtain the respective responses, so that a state related to a device connected to a bus can be determined by a control device.

However, in a device corresponding to a conventional AV/C command,. in order to check the state of the device as described above, a large number of commands must be transmitted. The checking procedure is complex, and requires cumbersome operations and a long period of time, disadvantageously. In addition, there is no method for checking unknown formats.

Device (units) may have various configurations, and many useless inquiries disadvantageously exist to generally check the configurations. In addition, an external input plug or an external output plug except for plugs connected to an IEEE1394 bus cannot be determined by a conventional descriptor.

Furthermore, when a determination for a plurality of nodes which can exist in a device is performed, determinations such as a determination whether the plurality of nodes can exist at once or a determination that the plurality of nodes are switched from each other cannot be performed by the conventional process. When a plurality of data handled in respective subunits are associated with each other (for example, audio data, text data being subordinate to the audio data, or the like), a determination whether processes for these data can be performed in parallel cannot be performed.

### DISCLOSURE OF THE INVENTION

It is an object of the present invention to make it possible to efficiently collect data related to devices between the devices connected through a bus based on the IEEE1394 system or the like.

According to the first invention, in a device data transmission method for transmitting data related to a device connected to a predetermined bus line through the bus line,
pieces of connection information which are connectable in the device are held at once as a predetermined table, and
all or part of the pieces of connection information in the held table are transmitted to another device as a command of a predetermined format through the bus line. In this manner, the information of the device connected through the bus can be easily obtained.

According to the second invention, in the device data transmission method of the first invention,
the pieces of connection information held in the table include information related to a connection between an input unit and an output unit held by the device and an internal function processing unit and information related to a format input or output from the device. In this manner, these pieces of information can be easily obtained.

According to the third invention, in the device data transmission method of the second invention,
the information held in the table and related to the connection between the input unit or the output unit and the function processing unit includes information related to a fact that the same data can be transmitted by a plurality of connections at once. In this manner, a setting related to that tha data can be transmitted at once can also be easily determined.

According to the fourth invention, in the device data transmission method of the second invention,
the pieces of connection information held in the table further include information related to a function of converting a format for inputting and outputting into another format. In this manner, a format handled by a corresponding device can also be easily determined.

According to the fifth invention, in the device data transmission method of the second invention,
an input unit or an output unit indicated by information held in the table include units except for an input unit or an output unit connected to the bus line. In this manner, the details of all the input units or all the output units held by the device can be determined.

According to the sixth invention, in the device data transmission method of the second invention,
information related to a present connection state in the device is transmitted to another device by transmission of a command of a predetermined format. In this manner, the present connection state of the device can be easily determined.

According to the seventh invention, in the device data transmission method of the sixth invention,
when a present connection state is changed, if another connection is influenced, information related to that is further transmitted. In this manner, an accident that another output or the like is changed to interrupt the outputting in the change in connection can be prevented.

According to the eighth invention, in a device data transmission method for transmitting data related a first device connected to a predetermined bus line to a second device through the bus line,
data for designating an input of an output unit held by the first device or an internal function processing unit is transmitted from the second device by a command of a predetermined format,
so that data related to a connection status between any two units of corresponding inputting unit, the corresponding output unit, and the internal function processing unit of the first device is transmitted to the second device. In this manner, when the input unit, the output unit, and the function processing unit of the first device are directly designated to obtain information related to a detailed state of the device, all data of a table need not be received and stored by the second device, and only data of a necessary connection state can be efficiently obtained.

According to the ninth invention, in the device data transmission method of the eighth invention,
data for designating the input unit held by the first device is transmitted to the second device. In this manner, the second device can also determine the state of the input unit held by the first device.

According to the tenth invention, in a device data transmission method for transmitting data related to a first device connected to a predetermined bus line to a second device through the bus line,
data for designating an input of an output unit or an internal function processing unit held by the first device is transmitted from the second device by a command of a predetermined format,
so that data for specifying a signal source of the data transmitted by the corresponding connection is transmitted to the second device. In this manner, a signal source of data output from the first device can be determined by the second device.

According to the eleventh invention, in the device data transmission method of the tenth invention,
when a plurality of signal sources exist, data related to the plurality of signal sources are transmitted. In this manner, when the plurality of signal sources exist, the plurality of signal sources can be determined by the second device.

According to the twelfth invention, in the device data transmission method of the tenth invention,
data representing that a plurality of signal sources exist is transmitted. In this manner, it can be determined by the second device that the plurality of signal sources exist.

According to the thirteenth invention, in the device data transmission method of the eighth invention,
data for designating the input unit or the output unit and the function processing unit has a data structure equal to that of data used when a setting related to a connection between the input unit or the output unit and the function processing unit is performed. In this manner, data transmitted to the bus line can be easily formed, and the transmitted data can be easily determined.

According to the fourteenth invention, in a device data transmission method for transmitting data related to a predetermined device connected to a predetermined bus line to another device through the bus line,
data related to an output state of a video image from a specific output unit of the predetermined device is output from the predetermined device. In this manner, the output state of the video image from the specific output unit of the device can be determined by data output from the predetermined device.

According to the fifteenth invention, in the device data transmission method of the fourteenth invention,
to the data related to the output state of the video image, a flag representing that a specific video image is superposed on the video image is added. In this manner, by determining the flag, it can be recognized that the specific video image is superposed on the video image output from the specific output unit of the specific device.

According to the sixteenth invention, in the device data transmission method of the fifteenth invention,
the specific video image represented by the flag is a video image of an on-screen display. In this manner, it can be recognized that the video image of the on-screen display is output.

According to the seventeenth invention, in the device data transmission method of the fourteenth invention,
a processing state of the video image is represented by a specific field of data related to an output state of the video image. In this manner, the processing state of the video image can be determined.

According to the eighteenth invention, in the device data transmission method of the seventeenth invention,
a processing state of the video image is represented by using a flag. In this manner, the processing state of the video image can be recognized by determining the flag.

According to the nineteenth invention, in the device data transmission method of the seventeenth invention,
a processing state represented by data in a specific field is data representing a state that predetermined data is extracted from multiplexed video data. In this manner, it is determined that the predetermined data is extracted from the multiplexed video data.

According to the twentieth invention, in the device data transmission method of the seventeenth invention,
a processing state represented by data in a specific field is data representing a state of an on-screen display for displaying data on which a video image is superposed. In this manner, it can be determined that the data is processed in the state of the on-screen display.

According to the twenty-first invention, in the device data transmission method of the seventeenth invention,
a processing state representing data in a specific field is data representing a state that a signal format of video data is converted. In this manner, it can be determined that the signal format of the video data is converted.

According to the twenty-second invention, in the device data transmission method of the seventeenth invention,
a processing state represented by data in a specific field is data representing a state that a special process is performed to a video image. In this manner, it can be determined that the special process is performed to the video image.

According to the twenty-third invention, in the device data transmission method of the twenty-second invention,
a state that a special process represented by data in a specific field is performed is a state that video images are mixed. In this manner, it can be determined that the video image is mixed.

According to the twenty-fourth invention, in the device data transmission method of the seventeenth invention,
a processing state represented by data in the specific field is data representing a state that the same video image as that of a signal source is set. In this manner, it can be recognized that the video image of the state equal to that of the video image of the signal source is output.

According to the twenty-fifth invention, a transmission device which can be connected to another device through a predetermined bus line, comprises:
storage means for holding pieces of connection information which are connectable in the device at once as a predetermined table; and
transmission control means for transmitting part or all of the pieces of connection information stored by the storage means to the bus line on the basis of a command of a predetermined format received through the bus line. In this manner, the pieces of connection information of the transmission device can be easily obtained by another device connected to the transmission device through the bus line.

According to the twenty-sixth invention, in the transmission device of the twenty-fifth invention,
the pieces of connection information held in the storage means include information related to a connection between an input unit or an output unit and an internal function processing unit held by the device and information related to a format input or output by the device. In this manner, the information related to the connection between the input unit or the output unit and the internal function processing unit held by the device and the information related to the format input or output by the device can be recognized by another device.

According to the twenty-seventh invention, in the transmission device of the twenty-sixth invention,
information related to a connection between an input unit or an output unit and a function processing unit held by the storage means includes information related to a fact that the same data can be transmitted by a plurality of connections at once. In this manner, a setting related to a fact that the same data can be transmitted by the plurality of connections at once can be recognized by another device.

According to the twenty-eighth invention, in the transmission device of the twenty-sixth invention,
pieces of connection information held in the storage means further include information related to a function of converting a format for inputting and outputting into another format. In this manner, a format handled by the device can also be easily determined.

According to the twenty-ninth invention, in the transmission device of the twenty-sixth invention,
an input unit or an output unit represented by theinformation held in the storage unit includes units except for an input unit or an output unit connected to the bus line. In this manner, the details of all the input units or all the output units held by the device can be determined by another device.

According to the thirtieth invention, in the transmission device of the twenty-sixth invention,
the transmission control means transmits information related to a present connection state in the device to another device by transmission of a command of a predetermined format. In this manner, the present connection state in the transmission device can be recognized by another device.

According to the thirty-first invention, in the transmission device of the thirtieth invention,
when a present connection state is changed, if another connection is influenced, the information transmitted by the transmission control means includes information related to that. In this manner, when the connection state in the transmission device is changed, it can be determined by the device which communicates with the device how another connection is influenced.

According to the thirty-second invention, a transmission device which can be connected to another device through a predetermined bus line comprises:
transmission control means for, when data for designating an input of an output unit or an internal function processing unit held by the device is received through a bus line, transmitting data related to a connection status between any two units of a corresponding input unit, the output unit, and the internal function processing unit. In this manner, the input unit, the output unit, and the function processing unit of the device are directly designated from the outside, so that information related to a detailed state can be obtained. On the device side which communicates with the transmission device, all data of a table need not be received and stored, and only the data of the necessary connection state can be efficiently obtained.

According to the thirty-third invention, in the transmission device of the thirty-second invention,
the transmission control means transmits data for designating an input unit held by the device to the bus line. In this manner, the state of the input unit held by the transmission device can also be determined by an external device.

According to the thirty-fourth invention, a transmission device which can be connected to another device through a predetermined bus line, comprises
transmission control means for, when data for designating a signal source of an input of an output unit held by the device or an internal function processing unit is received through the bus line, transmitting the data for specifying the signal source to the bus line. In this manner, the signal source output from the transmission device can be determined by a destination device.

According to the thirty-fifth invention, in the transmission device of the thirty-fourth invention,
transmission control means transmit, when a plurality of signal sources exist, data related to the plurality of signal sources. In this manner, the plurality of signal sources can be determined.

According to the thirty-sixth invention, in the transmission device of the thirty-fourth invention,
the transmission control means transmit, when a plurality of signal sources exist, data representing that the number of signal sources is plural. In this manner, it can be determined that the number of signal sources is plural.

According to the thirty-seventh invention, a transmission device which can be connected to another device through a predetermined bus line, comprises:
transmission control means for transmitting data related an output state of video data from an output unit held by the device to the bus line. In this manner, the output state of a video image from the transmission device can be recognized by a destination device.

According to the thirty-eighth invention, in the transmission device of the thirty-seventh invention,
the transmission control means adds a flag representing that a specific video data is superposed on a video data. In this manner, it is recognized by the flag that the specific video data is superposed on the video data.

According to the thirty-ninth invention, in the transmission device of the thirty-eighth invention,
the specific video data represented by a flag added by the transmission control means is video data of an on-screen display. In this manner, it can be recognized that the video data of the on-screen display is output.

According to the fortieth invention, in the transmission device of the thirty-seventh invention,
the transmission control means arranges data representing a processing state of a video image in a specific field of data related to an output state of a video image. In this manner, the processing state of the video image can be recognized.

According to the forty-first invention, in the transmission device of the fortieth invention,
the data in the specific field arranged by the transmission control means is data representing a state that predetermined data is extracted from multiplexed video data. In this manner, the state that the predetermined data is extracted from the multiplexed video data can be recognized.

According to the forty-second invention, in the transmission device of the fortieth invention,
the data in the specific field arranged by the transmission control means is data representing the state of an on-screen display for displaying a superposed video image. In this manner, the state of the on-screen display can be recognized.

According to the forty-third invention, in the transmission device of the fortieth invention,
the data in the specific field arranged by the transmission control means is data representing a state that a signal format of video data is converted. In this manner, the state that the signal format of the video data is converted can be recognized.

According to the forty-fourth invention, in the transmission device of the fortieth invention,
the data in the specific field arranged by the transmission control means is data representing a state that a special process is performed to the video image. In this manner, the state that the special process is performed to the video image can be recognized.

According to the forty-fifth invention, in the transmission device of the forty-fourth invention,
the state that the special process represented by the data in the specific field arranged by the transmission control means is a state that video images are mixed. In this manner, the state that the video image is mixed can be recognized.

According to the forty-sixth invention, in the transmission device of the fortieth invention,
the data in the specific field arranged by the transmission control means is data representing a state what is output is just equal to the video image of the signal source. In this manner, it is recognized that an image which is just equal to the video image of the signal source is output.

According to the forty-seventh invention, a transmission system in which a first device and a second device are connected to each other through a predetermined bus line, comprises:
as the first device,
storage means for holding pieces of connection information which are connectable in the first device at once as a predetermined table, and
transmission control means for transmitting part or all of the pieces of connection information stored by the storage means as a command of a predetermined format which received through the bus line; and
as the second device, connection determination means for determining the pieces of connection information in the first device on the basis of data transmitted to the bus line. In this manner, the pieces of connection information in the first device connected through the bus can be easily obtained by the second device.

According to the forty-eighth invention, in the transmission system of the forty-seventh invention,
the pieces of connection information held in the storage means of the first device include information related to a connection between an input unit or an output unit and an internal function processing unit held by the first device and information related to a format input or output by the first device,
so that the second device can determine these pieces of information. In this manner, these pieces of information can also be easily obtained by the second device.

According to the forty-ninth invention, in the transmission system of the forty-eighth invention,
the information held in the storage means of the first device and related to the connection between the input unit or the output unit and the function processing unit includes information related to a fact that the same data can be transmitted by a plurality of connections at once,
so that the second device can determine these pieces of information. In this manner, a setting related to a fact that the data can be transmitted at once can also be determined by the second device.

According to the fiftieth invention, in the transmission system of the forty-eighth invention,
the pieces of connection information held in the storage means of the first device further include information related to a function of converting a format for inputting and outputting into another format,
so that the second device can determine these pieces of information. In this manner, a format handled by the first device can also be easily determined by the second device.

According to the fifty-first invention, in the transmission system of the forty-eighth invention,
an input unit or an output unit represented by the pieces of information held in the storage means of the first device includes a unit except for an input unit or an output unit connected to the bus line,
so that the second device can determine these pieces of information. In this manner, the details of all the input units or all the output units held by the first device can be determined by the second device.

According to the fifty-second invention, in the transmission system of the forty-eighth invention,
the transmission control means of the first device transmits information related to a present connection state in the first device to the second device by transmitting a command of a predetermined format. In this manner, the present connection state of the first device can be easily determined.

According to the fifty-third invention, in the transmission system of the fifty-second invention,
when the present connection state is changed, if another connection is influenced, information transmitted by the transmission control means of the first device includes information related to the change in the present connection state,
so that the second device can determine the change in the present connection state. In this manner, an accident that another output or the like is changed to interrupt the outputting in the change in connection can be prevented.

According to the fifty-fourth invention, a transmission system in which a first device and a second device are connected to each other through a predetermined bus line, comprises:
as the first device,
transmission control means for, when data for designating an input of an output unit or an internal function processing unit held by the first device is received through the bus line, transmitting data related to a statuse of a connection between any two units of a corresponding input unit, the output unit, and the internal function processing unit to the bus line; and
as the second device, connection determination means for determining pieces of connection information in the first device on the basis of data transmitted to the bus line. In this manner, the input unit, the output unit, and the function processing unit of the first device are directly designated, so that information related to detailed states of the devices can be obtained. On the second device side, all the data of a table need not be received and stored, and only the data of the necessary connection state can be efficiently obtained.

According to the fifty-fifth invention, in the transmission system of the fifty-fourth invention,
the transmission control means of the first device transmits data for designating an input unit held by the device to the bus line, and
the connection determination means of the second device determines that the data is transmitted to the bus line. In this manner, a state of the input unit held by the first device can also be determined by the second device.

According to the fifty-sixth invention, a transmission system in which a first device and a second device are connected to each other through a predetermined bus line, comprises:
as the first device,
transmission control means for, when data for specifying a signal source of an input of an output unit or an internal function processing unit held by the first device is received through the bus line, transmitting the data for specifying the signal source to the bus line; and
as the second device, connection determination means for specifying a signal source on the basis of data transmitted from the first device. In this manner, the signal source of the data output from the first device can be determined by the second device.

According to the fifty-seventh invention, in the transmission system of the fifty-sixth invention,
when a plurality of signal sources exist, the transmission control means of the first device transmits data related to a plurality of signal sources, and
the connection determination means of the second device determines the plurality of signal sources. In this manner, when the plurality of signal sources exist, the plurality of signal sources can be determined by the second device.

According to the fifty-eighth invention, in the transmission system of the fifty-sixth invention,
when a plurality of signal sources exist, the transmission control means of the first device transmits data representing that the number of signal sources is plural, and
the connection determination means of the second device determines that the number of signal sources is plural. In this manner, it can be determined by the second device that the number of signal sources is plural.

According to the fifty-ninth invention, a transmission system in which a first device and a second device are connected to each other through a predetermined bus line, comprises:
as the first device,
transmission control means for transmitting data related to an output state of video data from an output unit held by the first device to the bus line; and
as the second device, state determination means for determining the output state on the basis of data transmitted from the first device. In this manner, the output state of a video image from a specific output unit of the first device can be recognized by the second device on the basis of data output from the first device.

According to the sixtieth invention, in the transmission system of the fifty-ninth invention,
the transmission control means of the first device adds a flag representing that a specific video data is superposed on a video data, and
the state determination means of the second device determines on the basis of the flag that the specific video data is superposed on the video data. In this manner, on the basis of the determination of the flag in the second device, it can be recognized that the specific video image is superposed on the video image output from the specific output unit of the first device.

According to the sixty-first invention, in the transmission system of the sixtieth invention, the specific video data represented by the flag added by the transmission control means of the first device is video data of an on-screen display, and the state determination means of the second device determines the video data of the on-screen display on the basis of the flag. In this manner, the second device can determine that the video image of the on-screen display is output from the first device.

According to the sixty-second invention, in the transmission system of the fifty-ninth invention,
the transmission control means of the first device arranges data representing a processing state of a video image in a specific field of data related to an output state of a video image, and
the state determination means of the second device can determine the processing state of the video image. In this manner, the processing state of the output video image of the first device can be determined by the second device.

According to the sixty-third invention, in the transmission system of the sixty-second invention,
the data in the specific field arranged by the transmission control means of the first device is data representing a state that predetermined data is extracted from multiplexed video data, and
the state determination means of the second device determines a state that the predetermined data is extracted from the multiplexed video data. In this manner, it can be determined by the second device that the predetermined data is extracted from the multiplexed video data.

According to the sixty-fourth invention, in the transmission system of the sixty-second invention,
the data in the specific field arranged by the transmission control means of the first device is data representing a state of an on-screen display for displaying a superposed video image, and
the state determination means of the second device determines the state of the on-screen display. In this manner, it can be determined by the second device that data is processed in the state of the on-screen display.

According to the sixty-fifth invention, in the transmission system of the sixty-second invention,
the data in the specific field arranged by the transmission control means of the first device is data representing a state that a signal format of video data is converted, and
the state determination means of the second device determines a state that the signal format of the video data is converted. In this manner, it can be determined by the second device that the video data output from the first device is a signal having a converted signal format.

According to the sixty-sixth invention, in the transmission system of the sixty-second invention,
the data in the specific field arranged by the transmission control means of the first device is data representing a state that a special process is performed to a video image, and
the state determination means of the second device determines the state that the special process is performed to the video image. In this manner, it can be determined by the second device that the special process is performed to the video image.

According to the sixty-seventh invention, in the transmission system of the sixty-sixth invention,
the state that a special process represented by the data in the specific field arranged by the transmission control means of the first device is performed is a state that video images are mixed, and
the state determination means of the second device determines the state that the video image is mixed. In this manner, it can be determined by the second device that the video images are mixed.

According to the sixty-eighth invention, in the transmission system of the sixty-second invention,
the data in the specific field arranged by the transmission control means of the first device is data representing a state that what is output is just equal to a video image of a signal source, and
the state determination means of the second device determines the state that what is output is just equal to the video image of the signal source. In this manner, it is recognized by the second device that a video image having a state which is just equal to that of the video image of the signal source is output.

### BRIEF DESCRIPTION OF DRAWINGS

FIG. 1 is a diagram showing an example in which the configuration of a conventional device is inquired.
FIG. 2 is a diagram showing an example in which connection information of a conventional device is inquired.
FIG. 3 is a block diagram showing a configuration of an entire system according to the first embodiment of the present invention.
FIG. 4 is a block diagram showing a configuration of a television receiver.
FIG. 5 is a block diagram showing a configuration of a video camera.
FIG. 6 is a block diagram showing a configuration of a video recording/reproducing device.
FIG. 7 is a diagram showing an example of a frame structure regulated by the IEEE 1394.
FIG. 8 is a diagram showing an example of the structure of an address space of a CRS architecture.
FIG. 9 is a diagram showing examples of the position, the name, and the operation of a main CRS.
FIG. 10 is a diagram showing a configuration of a plug control register.
FIG. 11 is a diagram showing a configuration of an oMPR, an oPCR, an iMPR, and an iPCR.
FIG. 12 is a diagram showing an example of a relationship among a plug, a plug control register, and a transmission channel.
FIG. 13 is a diagram showing an example of connection information related to an output of a device according to the first embodiment of the present invention.
FIG. 14 is a diagram showing an example of connection information related an input of the device according to the first embodiment of the present invention.
FIG. 15 is a diagram showing an example of connection information related to an output of an input from the outside of the device according to the first embodiment of the present invention.
FIG. 16 is a diagram showing data of a unit plug according to the first embodiment of the present invention.
FIG. 17 is a diagram showing a data structure obtained by hierarchical structure of a descriptor.
FIG. 18 is a diagram showing a configuration of a descriptor related to connection information according to the first embodiment of the present invention.
FIG. 19 is a diagram showing an example of a stack model of an AV/C command.
FIG. 20 is a diagram showing an example of a relationship between a command and a response of the AV/C command.
FIG. 21 is a diagram more exactly showing an example of the relationship between the command and the response of the AV/C command.
FIG. 22 is a diagram showing an example of a data structure of the AV/C command.
FIG. 23 is a diagram showing a concrete example of the AV/C command.
FIG. 24 is a diagram showing a concrete example of the command and the response of the AV/C command.
FIG. 25 is a diagram showing data of a type and a state of a connection according to the first embodiment of the present invention.
FIG. 26 is a diagram showing data of a type and a state of a signal input/output according to the first embodiment of the present invention.
FIG. 27 is a diagram showing an example of a connect status command according to the first embodiment of the present invention.
FIG. 28 is a diagram showing an example of the connect status response according to the first embodiment of the present invention.
FIG. 29 is a diagram showing an example of a signal flow status command according to the second embodiment of the present invention.
FIG. 30 is a diagram showing an example of a signal flow status response according to the second embodiment of the present invention.
FIG. 31 is a diagram showing an example of a connect command according to the second embodiment of the present invention.
FIG. 32 is a diagram showing data of a connection status response according to the second embodiment of the present invention.
FIG. 33 is a diagram showing data of an output status response according to the second embodiment of the present invention.
FIG. 34 is a diagram showing data of an output state according to the second embodiment of the present invention.
FIG. 35 is a diagram showing data of a multi-source according to the second embodiment of the present invention.
FIG. 36 is a diagram showing an example to which a multi-source according to the second embodiment of the present invention is applied.
FIG. 37 is a diagram showing data transmission of a multi-source field according to the second embodiment of the present invention.
FIG. 38 is a diagram showing a data configuration of a signal source status command according to the third embodiment of the present invention.
FIG. 39 is a diagram showing a data configuration of a signal source status response according to the third embodiment of the present invention.
FIG. 40 is a diagram showing an example of data of an output status field according to the third embodiment of the present invention.
FIG. 41 is a diagram showing an example of data of a signal status field according to the third embodiment of the present invention.

### BEST MODE FOR CARRYING OUT THE INVENTION

The first embodiment of the present invention will be described below with reference to FIGS. 1 to 28.

A configuration of a network system to which the present invention is applied will be described below with reference to FIG. 1. In this network system, a plurality of devices are connected through a serial data bus (to be referred to as a bus hereinafter) based on the IEEE1394 and serving as a digital communication control bus. In FIG. 1, an example in which three AV devices 100, 200, and 300 are connected through buses 1 and 2 is shown. As devices connected to the buses 1 and 2, devices including terminals to which an IEEE1394 bus is connected are used. A television receiver 100, a video camera 200, and a video cassette recorder (VCR) 300 are connected. The video camera 200 also has a function of performing recording/reproducing on/from a magnetic tape or the like. A remote control device 11 attached to the television receiver 100 is designed to control not only the television receiver 100 but also the video camera 200 and the video cassette recorder 300.

The respective devices 100, 200, and 300 connected to the bus 1 are called units. Among the units, by using a command regulated by AV/C Digital Interface Command Set General Specification of AV/C Command Transaction Set (to be referred to as AV/C hereinafter), pieces of information stored in the units can be mutually read/written, so that the units can be controlled. The functions included in the respective units are called as subunits. In this embodiment, the devices have a descriptor related to connection information which can be accessed in the devices. The details of the descriptor will be described later.

The units connected to the bus 1 are also called nodes. Node IDs are set in the units, respectively, and the source or the destination of data transmitted onto the bus is specified by the node ID. When a new device is connected to the bus 1, or when a device connected to the bus 1 is removed, bus reset is performed to reset the node ID again. Therefore, when the bus reset occurs, the node IDs of the devices may change.

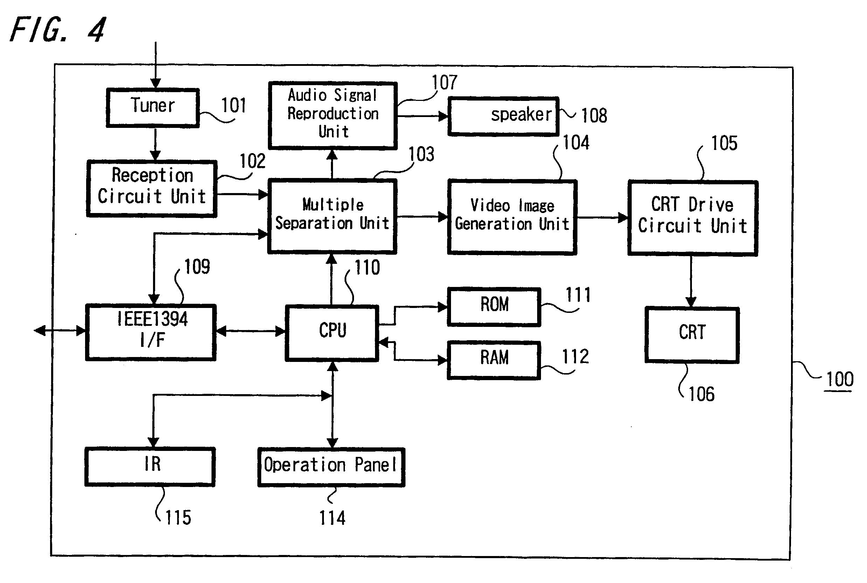

FIG. 4 is a block diagram showing a configuration of a television receiver 100. The television receiver 100 of this embodiment is a device which is called a digital television receiver and receives a digital broadcast to display the digital broadcast.

Digital broadcast data obtained by causing a tuner 101 to which an antenna (not shown) is connected to receive a predetermined channel is supplied to a reception circuit unit 102 and decoded. The decoded broadcast data is supplied to a multiple separation unit 103 and separated into video data and audio data. The separated video data is supplied to a video image generation unit 104 and subjected to a process for image reception. On the basis of the processed signal, a cathode ray tube (CRT) 106 is driven by the CRT drive circuit unit 105 to display a video image. The audio data separated by the multiple separation unit 103 is supplied to an audio signal reproducing unit 107 and subjected to audio processes such as analog conversion and amplification, and the processed audio signal is supplied to a speaker 108 to be output.

The television receiver 100 comprises an interface unit 109 for connecting the television receiver 100 to an IEEE 1394 bus, and is designed to supply the video data and the audio data obtained from the IEEE 1394 bus to the interface unit 109 to the multiple separation unit 103 such that a display of the video image on the CRT 106 and an audio output from the speaker 108 can be performed. The video data and the audio data obtained by reception of the tuner 101 are supplied from the multiple separation unit 103 to the interface unit 109, so that the video data and the audio data can be transmitted to the IEEE 1394 bus.

A display process in the television receiver 100 and a transmission process through the interface unit 109 are executed under the control of a central processing unit (CPU) 110. To the CPU 110, a memory 111 serving as a ROM in which a program required for control is stored and a memory 112 serving as a work RAM are connected. Operation information from an operation panel 114 and control information received from a remote control device by an infrared ray receiving unit 115 are supplied to the CPU 110, so that operation control corresponding to the operation information and the control information is performed. In addition, when the interface unit 109 receives control data such as an AV/C command (to be described later) through the IEEE 1394 bus, the data is supplied to the CPU 110, so that the CPU 110 can perform corresponding operation control.

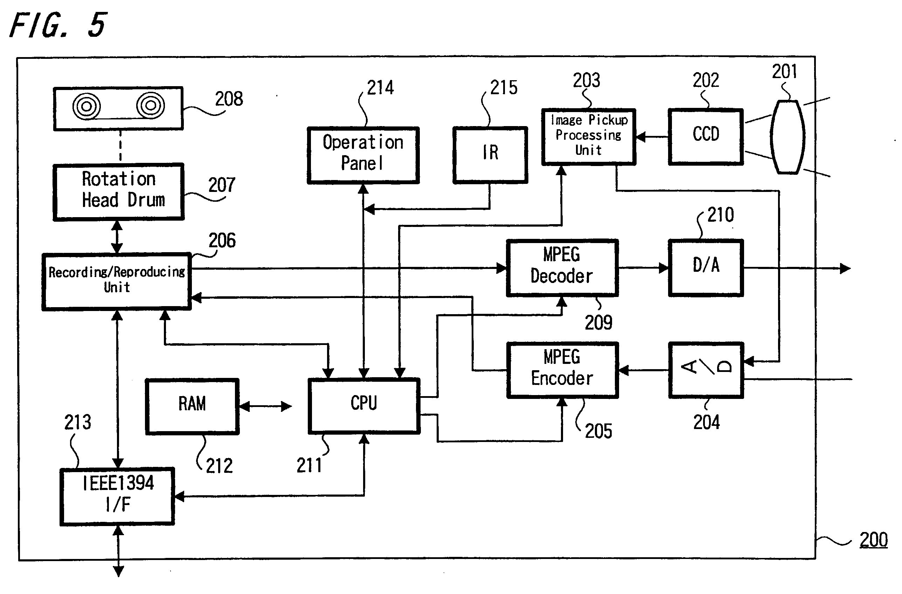

FIG. 5 is a block diagram showing a configuration of a video camera 200.

Image light focused on an image pickup surface of a CCD imager 202 is converted into an electric image pickup signal through an optical system 201 such as a lens. An image pickup signal output from the CCD imager 202 is supplied to an image pickup signal processing unit 203 to be a video signal of a predetermined system. The video signal output from the image pickup signal processing unit 203 is supplied to an analog/digital converter 204 to be digital video data. The digital video data is supplied to an MPEG (Moving Picture Expers Group) encoder 205 to be video data of a system appropriate to recording, i.e., the MPEG2.

The data encoded by the MPEG encoder 205 is supplied to a recording/reproducing unit 206 and subjected to a process for recording, and the processed recording data is supplied to a recording head in a rotation head drum 207 to be recorded on a magnetic tape in a tape cassette 208.

The video signal input from the outside is converted into digital data by the analog/digital converter 204 to be video data of, e.g., the MPEG2 by the MPEG encoder 205. The video data is supplied to the recording/reproducing unit 206 to be subjected to a process for recording. The processed recording data is supplied to the recording head in the rotation head drum 207 to be recorded on the magnetic tape in the tape cassette 208.

As the configuration of a reproducing system, a signal obtained by reproducing the magnetic tape in the tape cassette 208 by the rotation head drum 207 is subjected to a reproducing process by the recording/reproducing unit 206 to obtain video data. The video data is supplied to the MPEG decoder 209 to perform decoding from, e.g., the MPEG2. The decoded data is supplied to a digital/analog converter 210 and output to the outside as an analog video signal.

In the recording system and the reproducing system described above, processes for the audio data are omitted. However, the audio data can be recorded and reproduced together with the video data, and voice received through a microphone (not shown) is also recorded in an image pickup operation.

The video camera 200 comprises an interface unit 213 for connecting the video camera 200 to the IEEE 1394 bus and supplies video data or audio data obtained from the IEEE 1394 bus to the interface unit 213 to the recording/reproducing unit 206, so that the video data or audio data can be recorded on the magnetic tape in the tape cassette 208. The video data or the audio data reproduced from the magnetic tape in the tape cassette 208 or video data or audio data obtained by an image pickup operation are supplied from the recording/reproducing unit 203 to the interface unit 213, so that the video data or the audio data can be transmitted to the IEEE 1394 bus.

In the transmission through the interface unit 213, when a system (e.g., the MPEG2 described above) in which data is recorded on a medium (magnetic tape) in the video camera 200 is different from a system of data transmitted on the IEEE 1394 bus, the systems can also be converted by a circuit in the video camera 200.

The image pickup process, the recording process, and the reproducing process in the video camera 200 and the transmission process through the interface unit 213 are executed under the control of a central processing unit (CPU) 211. To the CPU 211, a memory 212 serving as a work RAM is connected. Operation information from an operation panel 214 and control information received from a remote control device by an infrared ray receiving unit 215 are supplied to the CPU 211, so that operation control corresponding to the operation information and the control information is performed. In addition, when the interface unit 213 receives control data such as an AV/C command (to be described later) through the IEEE 1394 bus, the data is supplied to the CPU 211, so that the CPU 211 can perform corresponding operation control.

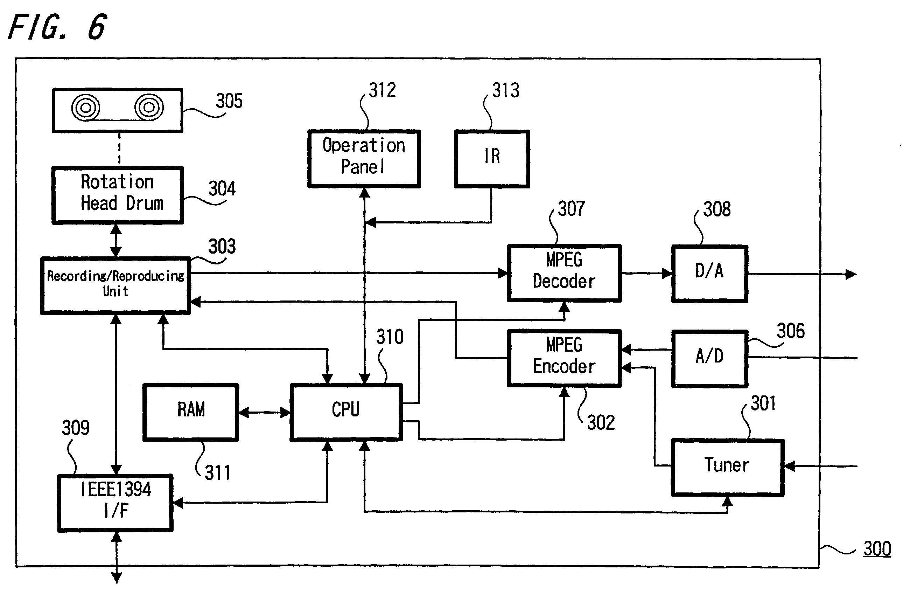

FIG. 6 is a block diagram showing a configuration of a video cassette recorder 300.

As the configuration of a recording system, digital broadcast data obtained by causing a tuner 301 incorporated in the video cassette recorder 300 to receive a predetermined channel is supplied to an MPEG (Moving Picture Expers Group) encoder 302 to be video data and audio data of a system appropriate to recording, e.g., the MPEG2. When the received broadcast data is of the MPEG2, the process in the encoder 302 is not performed.

The data encoded by the MPEG encoder 302 is supplied to a recording/reproducing unit 303 and subjected to a process for recording, and the processed recording data is supplied to a recording head in a rotation head drum 304 to be recorded on a magnetic tape in a tape cassette 305.

An analog video signal and an analog audio signal input from the outside are converted into digital data by an analog/digital converter 306, and the digital data are converted into video data and audio data of, e.g., the MPEG2 by the MPEG encoder 302. The video data and the audio data are supplied to the recording/reproducing unit 303 and subjected to a process for recording. The processed recording data are supplied to the recording head in the rotation head drum 304 to be recorded on the magnetic tape in the tape cassette 305.

As the configuration of a reproducing system, a signal obtained by reproducing the magnetic tape in the tape cassette 305 by the rotation head drum 304 is subjected to a reproducing process by the recording/reproducing unit 303 to obtain video data and audio data. The video data and the audio data are supplied to the MPEG decoder 307 to perform decoding from, e.g., the MPEG2. The decoded data is supplied to a digital/analog converter 308 and output to the outside as an analog video signal and an analog audio signal.

The video cassette recorder 300 comprises an interface unit 309 for connecting the video cassette recorder 300 to the IEEE 1394 bus and supplies video data or audio data obtained from the IEEE 1394 bus to the interface unit 309 to the recording/reproducing unit 303, and the video data or audio data can be recorded on the magnetic tape in the tape cassette 305. The video data or audio data reproduced from the magnetic tape in the tape cassette 305 are supplied from the recording/reproducing unit 303 to the interface unit 309, so that the video data or audio data can be transmitted to the IEEE 1394 bus.

In the transmission through the interface unit 309, when a system (e.g., the MPEG2 described above) in which data is recorded on a medium (magnetic tape) in the video cassette recorder 300 is different from a system of data transmitted on the IEEE 1394 bus, the systems can also be converted by a circuit in the video cassette recorder 300.

The recording process and the reproducing process in the video cassette recorder 300 and the transmission process through the interface unit 309 are executed under the control of a central processing unit (CPU) 310. To the CPU 310, a memory 211 serving as a work RAM is connected. Operation information from an operation panel 312 and control information received from a remote control device by an infrared ray receiving unit 313 are supplied to the CPU 310, so that operation control corresponding to the operation information and the control information is performed. In addition, when the interface unit 309 receives control data such as an AV/C command (to be described later) through the IEEE 1394 bus, the data is supplied to the CPU 310, so that the CPU 310 can perform corresponding operation control.

Data transmission states in the IEEE 1394 buses 1 and 2 to which the devices 100, 200, and 300 are connected will be described below.

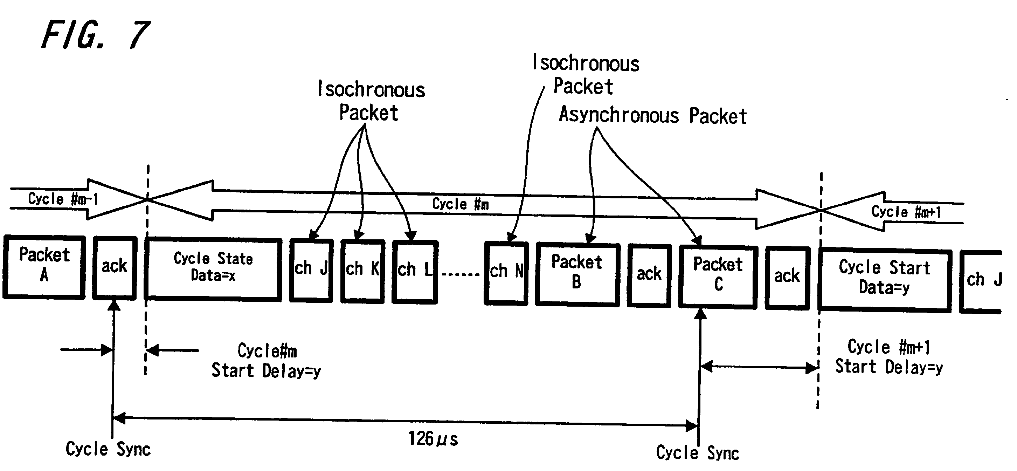

FIG. 7 is a diagram showing the cycle structure of data transmission of devices connected through the IEEE 1394. In the IEEE 1394, data is divided into packets, and the packets are transmitted in a time sharing manner with reference to a cycle having a length of 125 µS. The cycle is made on the basis of a cycle start signal supplied from a node (any device connected to the bus) having a cycle master function. An isochronous packet assures a band (which is a time unit but is called a band) required for transmission from the starts of all the cycles. For this reason, in isochronous transmission, transmission of the data within a predetermined time of period is secured. However, acknowledgement from the reception side is not performed. When a transmission error occurs, a protection device does not exist, and the data are lost. In asynchronous transmission in which a node assuring a bus as a result of arbitration transmits an asynchronous packet in a period of time which is not used in isochronous transmission of the respective cycles, reliable transmission is secured by using acknowledge and retry. However, the transmission timing is not constant.

In order to cause a predetermined node to perform isochronous transmission, the node must correspond to an isochronous function. In addition, at least one of nodes which correspond to the isochronous function must have a cycle muster function. In addition, at least one of nodes connected to an IEEE 1394 serial bus must have a function of an isochronous resource manager.

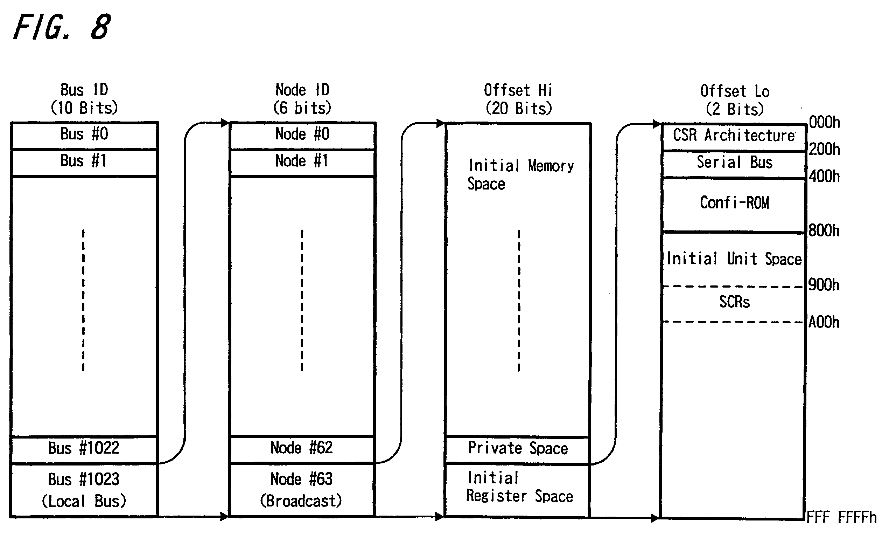

The IEEE 1394 conforms to a CSR (Control & Status Register) architecture having a 64-bit address space regulated by ISO/IEC 13213. FIG. 8 is a diagram for explaining the structure of the address space of the CSR architecture. The upper 16 bits represent a node ID representing a node on each IEEE 1394 bus, and the remaining 48 bits are used to designate address spaces given to the respective nodes. The upper 16 bits are classified into 10 bits of a bus ID and 6 bits of a physical ID (node ID in a strict sense). Since a value obtained when all the bits are 1 is used for a special object, 1,023 buses and 63 nodes can be designated. The node ID is added again when bus reset occurs. The bus reset occurs when the configuration of the devices connected to the bus line 1 changes. For example, when it is recognized that any one of devices connected to the bus 1 is removed, or that a new device is connected to the bus 1, the bus reset is executed.

A space regulated by the upper 20 bits in a 256-terabytes address space regulated by lower 48 bits is divided into an initial register space (Initial Register Space) used for a 2048-byte register unique to the CSR, a register unique to the IEEE 1394, or the like, a private space (Private Space), an initial memory space (Initial Memory Space), and the like. In the case that a space regulated by the upper 20 bits is the initial register space, a space regulated by the lower 28 bits is used as a configuration ROM (Configuration read only memory), an initial unit space (Initial Unit Space) uniquely applied to a node, a plug control register (Plug Control Register (PCRs)), or the like.

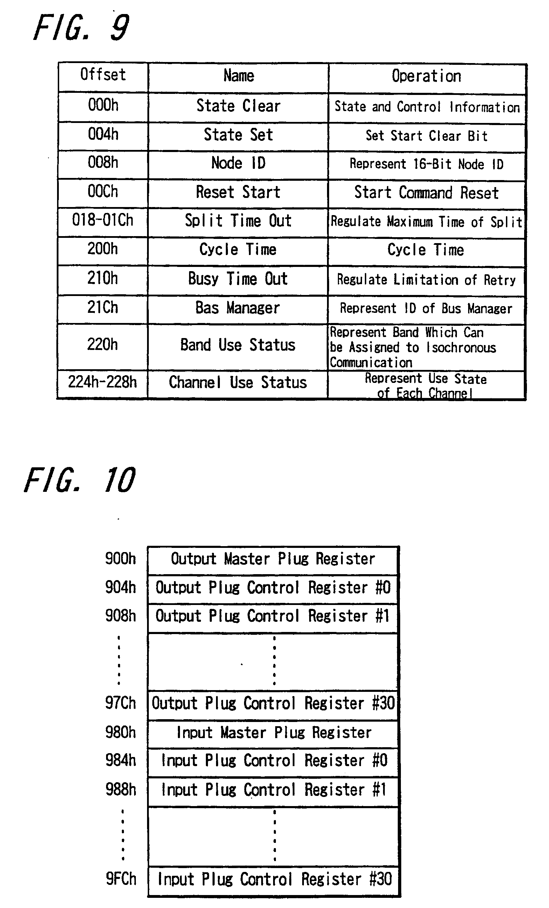

FIG. 9 is a diagram for explaining offset addresses, names, and operations of a main CSR. The offset in FIG. 9 represents an offset address from FFFFF0000000h (number including h at the end represents hexadecimal notation) at which the initial register space is started. A bandwidth available register (Bandwidth Available Register) having an offset 220h represents a band which can be assigned to isochronous communication, and only the value of a node operating as an isochronous resource manager is effective. More specifically, although each node has the CSR in FIG. 8, only a bandwidth available register of the isochronous resource manager is effective. In other words, only the isochronous resource manager substantially has the bandwidth available register. The maximum value is stored in the bandwidth available register when a band is not assigned to the isochronous communication, and the value reduces each time the band is assigned.

Channel available registers (Channels Available Register) of offsets 224 to 228h have bits corresponding to the channel numbers of number 0 to number 63, respectively. A bit of 0 represents that the channel has been assigned. Only the channels available register of a node operating as an isochronous resource manager is effective.

Returning to FIG. 8, a configuration ROM based on a general ROM (read only memory) format is arranged at addresses 200h to 400h in the initial register space. In the configuration ROM, a bus info block, a root directory, and a unit directory are arranged. An ID number representing the manufacturer of the device is stored in a company ID (Company ID) in the bus info block. A unique ID which is inherent in the device and which is different from those of other devices in the world is stored in a chip ID (Chip ID).

Since inputting/outputting of a device is controlled through an interface, a node has a PCR (Plug Control Register) regulated by IEC 1883 at addresses 900h to 9FFh in the initial unit space in FIG. 8. This is obtained by substantiating the concept of a plug to logically form a signal path similar to an analog interface. FIG. 10 is a diagram for explaining the configuration of the PCR. The PCR has an oPCR (output Plug Control Register) representing an output plug and an iPCR (input Plug Control Register) representing an input plug. In addition, the PCR has registers oMPR (output Master Plug Register) and iMPR (input Master Plug Register) representing information of an output plug or an input plug inherent in each device. Although each device does not have a plurality of oMPRs and a plurality of iMPRS, the device can have a plurality of oPCRs and iPCRs corresponding to the respective plugs by the capability of the device. The PCR shown in FIG. 10 has 31 oPCRs and 31 iPCRs. The flow of isochronous data is controlled by operating registers corresponding to these plugs.

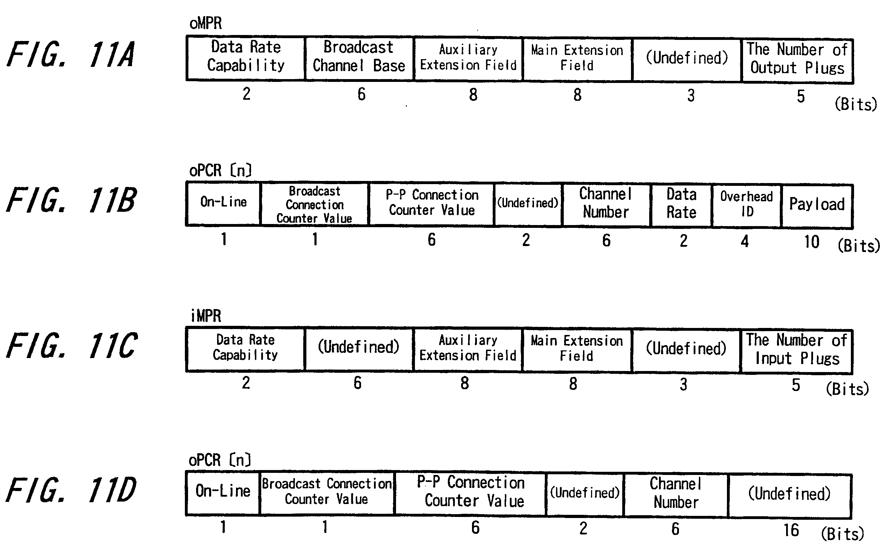

FIG. 11 shows diagrams showing the configurations of an oMPR, an oPCR, an iMPR, and an iPCR. FIG. 11A shows the configuration of the oMPR, FIG. 11B shows the configuration of the oPCR, FIG. 11C shows the configuration of the iMPR, and FIG. 11D shows the configuration of the iPCR. As 2-bit data rate capabilities of the oMPR and the iMPR on the MSB side, codes representing the maximum transmission speeds of isochronous data which can be transmitted or received by the device are stored. The broadcast channel base of the oMPR regulates the number of a channel used for broadcast outputting (broadcast outputting).

As the number of output plugs of 5 bits on the LSB side of the oMPR, the number of output plugs held by the device, i.e., a value representing the number of oPCRs is stored. As the number of input plugs of 5 bits on the LSB side of the iMPR, the number of input plugs held by the device, i.e., a value representing the number of iPCRs is stored. A main extension field and an auxiliary extension field are regions defined for extension in the future.

The on-lines of the MSBs of the oPCR and the iPCR represent use states of the plug. More specifically, the value of 1 represents that the plug is on-line, and the value of 0 represents that the plug is off-line. Each of the values of broadcast connection counters of the oPCR and the iPCR represents the presence (1) or the absence (0) of a broadcast connection. A value held by a point-to-point connection counter having a 6-bit width of each of the oPCR and the iPCR represents the number of point-to-point connections held by the plug. A point-to-point connection (so-called a p-p connection) is a connection for performing transmission only between one specific node and another specific node.

A value held by the channel number having a 6-bit width of each of the oPCR and the iPCR represents the number of an isochronous channel to which the plug is connected. A value of a data rate having a 2 bit width of the oPCR represents an actual transmission speed of a packet of isochronous data output from the plug. A code stored in an overhead ID having a 4-bit width of the oPCR represents the bandwidth of over of isochronous communication. The value of a payload having a 10-bit width of the oPCR represents the maximum value of data included in an isochronous packet which can be handled by the plug.

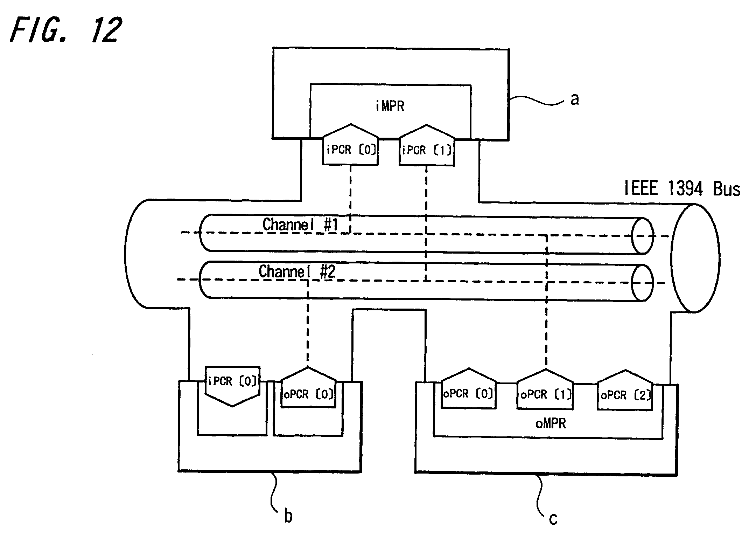

FIG. 12 is a diagram showing a relationship among a plug, a plug control register, and an isochronous channel. In this case, devices connected to the IEEE 1394 bus are represented as AV-devices a, b, and c. Isochronous data having a channel designated by oPCR [1] of oPCR [0] to oPCR [2] in which transmission speeds and the number of oPCRs are regulated by the oMPR of the AV-device c is transmitted to channel #1 of the IEEE 1394 serial bus. The AV-device a loads the isochronous data transmitted to the channel #1 of the IEEE 1394 serial bus. Similarly, the AV-device b transmits isochronous data to channel #2 designated by oPCR [0], and the AV-device a loads the isochronous data from channel #2 designated by iPCR [1].

In this manner, data transmission is performed between devices connected through the IEEE 1394 serial bus.

The configuration of tables which are required when one device connected to the bus in the above structure examines the functions of other devices and which are held by the devices (units) will be described below. In this example, a corresponding node and a signal format flowing in the node are listed up every unit plug and stored as a table. In this case, tables are classified by three types, i.e., transmission (Source), reception (Destination), and signal conversion (Transformation) held by the devices (units). Each of the tables constitutes a descriptor based on an AV/C command.

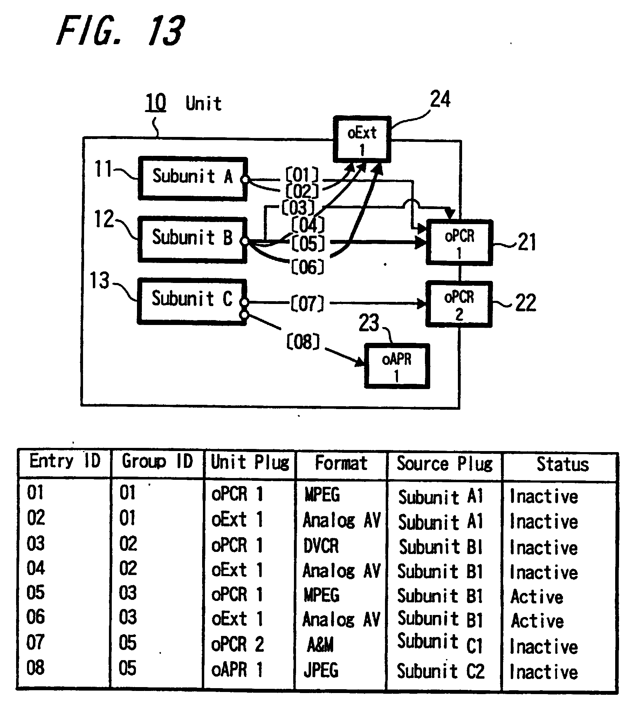

FIGS. 13, 14, and 15 are diagrams showing actual configurations of devices (units) 10 and functions which correspond to the devices and which are listed up. The unit 10 comprises three subunits 11, 12, and 13, and, as output plugs, output plugs 21, 22, and 23 connected to an IEEE 1394 bus and an output plug 124 of a format for another system. As input plugs, the unit 10 comprises input plugs (iPCR) 31, 32, and 33 connected to the IEEE 1394 bus and an input plug 134 of a format for another system. The two plugs (oPCR) 21 and 22 of the output plugs connected to the IEEE 1394 bus are plugs for isochronous transfer, and the other plug (oAPR) 23 is a plug for asynchronous transfer. The two plugs (iPCR) 31 and 32 of the input plugs connected to the IEEE 1394 bus are plugs for isochronous transfer, and the other plug (iAPR) 133 is a plug for asynchronous transfer. These plugs connected to the IEEE 1394 bus are plugs which are virtually constituted as described above. There are not three physical terminals.

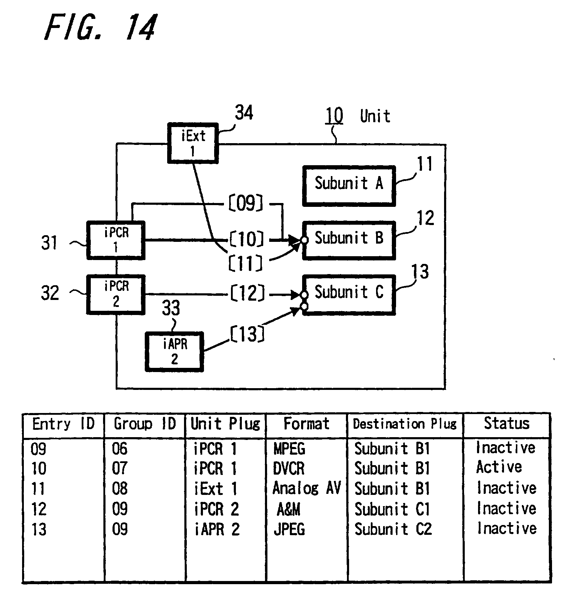

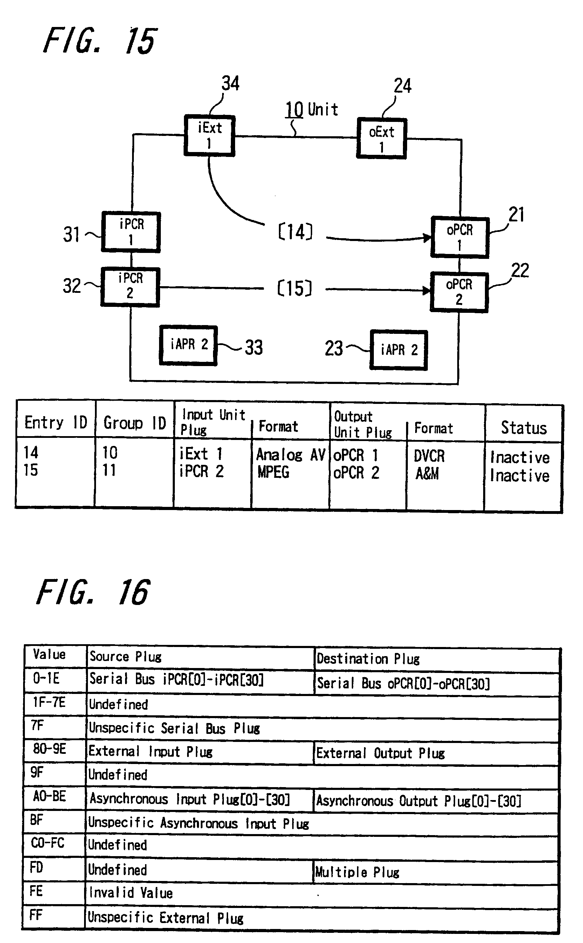

FIG. 13 shows the configuration (i.e., an output path of a signal from each subunit) of transmission (Source). FIG. 14 shows the configuration (i.e., an input path of a signal to each subunit) of reception (Destination). FIG. 15 shows signal conversion (Transformation) which can be realized in the unit 10.

The listed up data will be described below in detail. Entry IDs which are serial numbers through the three tables are given. As the serial numbers of numbers which is related to nodes, group IDs are given. Here, the relation includes the following three cases.
1. Case in which the same signal flows through a plurality of nodes. For example, in this case, contents which are digitally recorded are digitally output onto a bus, and, at the same time, decoded contents are output through an analog path.
2. Case in which different outputs flow in different paths as combinations. For example, in this case, a video image and voice which are synchronized with each other are flowed through perfectly different nodes, or a text and data of a still image are asynchronously flowed with certain timing in the voice.
3. Case representing relation to an operation of another function unit. For example, when another function unit and contents thereof are selected through a panel subunit, a selected functional unit can be represented.

As data representing the format of the contents transmitted through external input/output plugs of the device, data of a supported format are known. data of unit plugs representing the numbers of the external input plug and the external output plug corresponding to the data and data of a subunit plug of an internal function (subunit) unit are known.

Data of a status representing the present use state is given to data of each respective node. Data represented as active represents a state in use, and data represented as inactive represents a state not in use.

The correspondence between the functions and the values of the unit plugs are given every function as shown in, e.g., FIG. 16. For example, values given to an input plug and an output plug of an IEEE 1394 serial bus for isochronous transmission, values given to an input plug and an output plug connected to a bus of another format, values given to an input plug and an output plug using signal lines except for the bus, values given to an input plug and an output plug for IEEE 1394 asynchronous transmission, values given to an input plug and an output plug for asynchronous transmission of another system, and a value given to an output plug which can simultaneously output data to a plurality of plugs are known.

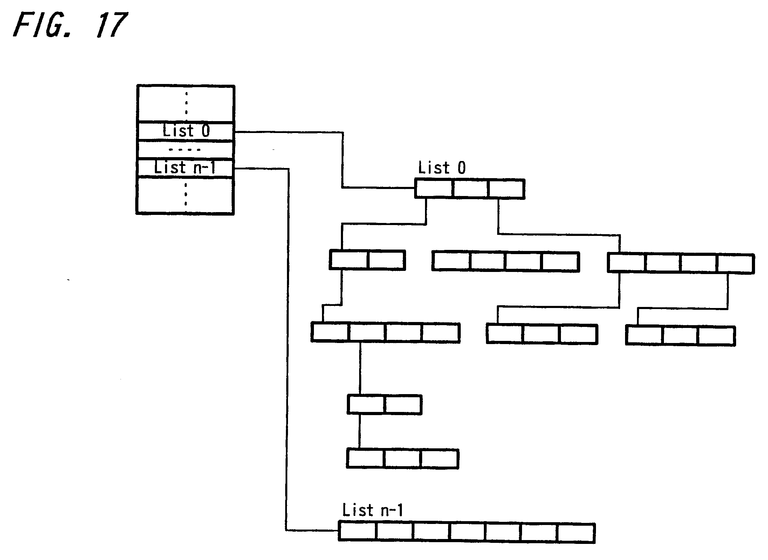

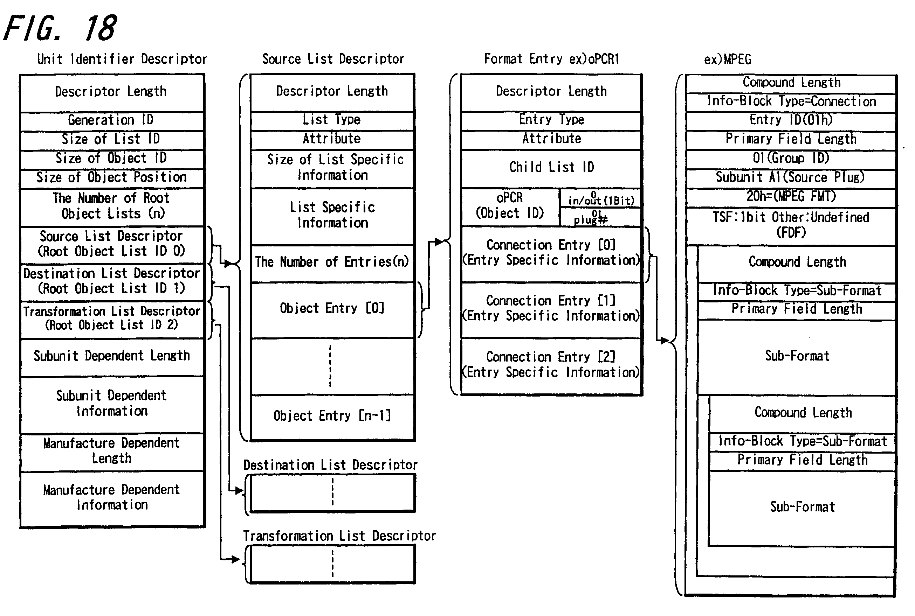

FIG. 18 is a diagram showing the table constituted as described above as a descriptor regulated by an AV/C command. This descriptor includes data having a hierarchical structure. More specifically, the descriptor regulated by the AV/C command has a hierarchical structure as shown in FIG. 17. FIG. 18 shows a concrete example of the descriptor. As shown on the left end in FIG. 18, a unit descriptor (Unit Identifier Descriptor) represents all data. Of these data, a descriptor (Source List Descriptor) of a list of transmission (Source), a descriptor (Destination List Descriptor) of a list of reception (Destination), and a descriptor (Transformation List Descriptor) of a list of signal conversion (Transformation) are constituted by detailed data.

In the descriptor of each list, the details of a format handled by a plug, the details of the subunit plugs connected to the plug, and the like are represented by data of format entry (Format Entry). In this case, by data to which a plug number is given, it can be recognized whether the plug is a plug connected to the serial bus, a plug of another format, or the like.

In addition, by data of connection entry (Connection Entry) representing the details of the data of the format entry represents a plug which can input or output data of a specific format (e.g., the MPEG format or the like).

A process performed when the descriptor constituted as described above is read from another device (control device) will be described below. When the descriptor regulated by the AV/C command is read, this reading is performed by transmitting a request command for designating reading to a corresponding device by asynchronous transmission. In this case, after a command for opening the descriptor at the first time is transmitted, and a read command for reading the opened descriptor, so that the contents of the corresponding descriptor are transmitted.

In this case, an AV/C command transmitted to read and write a descriptor will be described below.

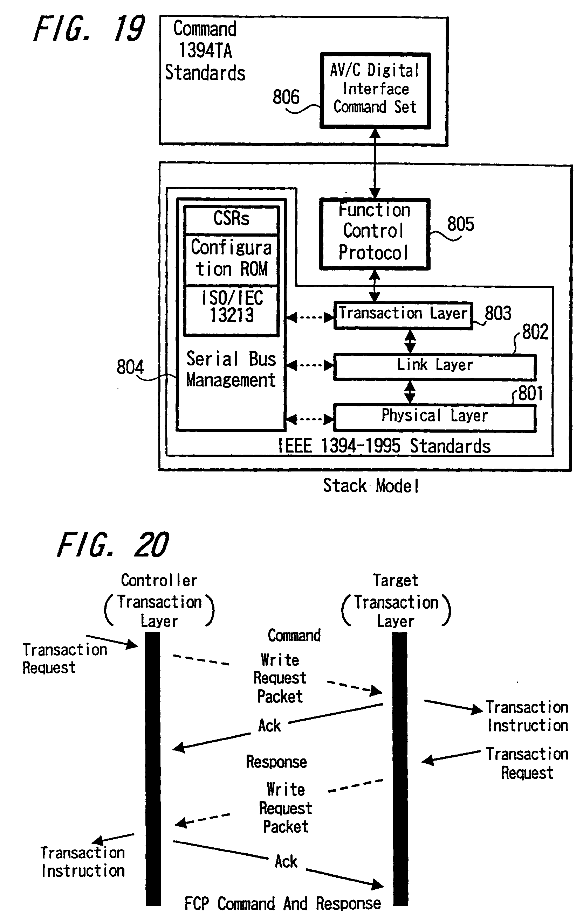

FIG. 19 shows a stack model of an AV/C command set. As shown in FIG. 19, a physical layer 801, a link layer 802, a transaction layer 803, and a serial bus management 804 conforms to the IEEE 1394. An FCP (Function Control Protocol) 805 conforms to the IEC 61883. An AV/C command set 806 conforms to the 1394 TA spec.

FIG. 20 is a diagram for explaining a command and a response of the FCP 85 in FIG. 19. The FCP is a protocol for controlling devices (nodes) on an IEEE 1394 bus. As shown in FIG. 16, an object which performs control is a controller, and an object which is controlled is a target. Transmission or response of a command of the FCP is performed between nodes by using a light transaction of IEEE 1394 asynchronous communication. The target which receives data returns an acknowledge to the controller to perform reception check.

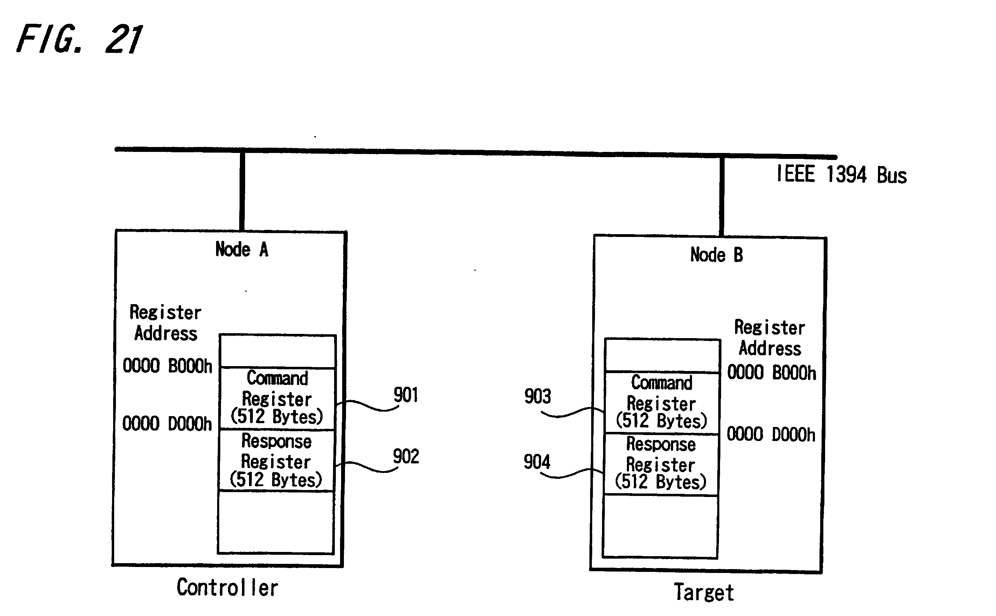

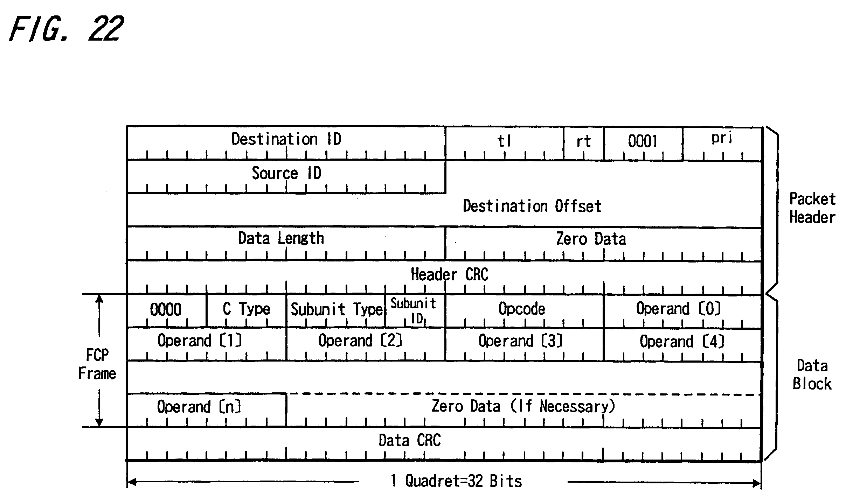

FIG. 21 is a diagram for more exactly explaining a relationship between the command and the response of the FCP shown in FIG. 20. A node A and a node B are connected to each other through an IEEE 1394 bus. The node A is a controller, and the node B is a target. For each of the node A and the node B, a command register of 512 bytes and a response register of 512 bytes are prepared. As shown in FIG. 17, the controller writes a command message in a command register 903 of the target to transmit an instruction. In contrast to this, the target writes a response message in a response register 902 of the controller to transmit a response. With respect to the two messages described above, control information is exchanged. The type of a command set transmitted by the FCP is described in a CTS in the data field in FIG. 22 (to be described later).

FIG. 22 shows the data structure of a packet transmitted in an asynchronous transfer mode of the AV/C command. An AV/C command set is a command set for controlling an AV-device, and is CTS (ID of a command set) = "0000". An AV/C command frame and a response frame are exchanged between nodes by using the FCP. In order to reduce a load on the bus and the AV-device, response to a command must be performed within 100 ms. As shown in FIG. 22, the data of the asynchronous packet is constituted by 32 bits (= 1 quadled) in the horizontal direction. The upper stage in FIG. 22 represents the header portion of the packet, and the lower stage in FIG. 22 represents a data block. A destination (destination ID) represents a destination.

A CTS represents the ID of the command set, and satisfies CTS = "0000" in the AV/C command set. The field of ctype/response represents a function classification of commands when packets are commands, and the field represents processing results of commands when packets are responses. The commands are roughly classified as four types, i.e., (1) a command for controlling a function from the outside (CONTROL), (2) a command for inquiring a status from the outside (STATUS), (3) a command for inquiring the presence/absence of a support of a control command from the outside (GENERAL INQUIRY (the presence/absence of a support of opcode) and SPECIFIC INQUIRY (the presence/absence of a support of opcode and operands), and (4) a command for requesting that a change in status is notified to the outside (NOTIFY).

The response is returned depending on the type of the command. As responses to a control (CONTROL) command, "not implemented" (NOT IMPLEMENTED)", "accepted" (ACCEPTED), " rejected" (REJECTED), and "interim" (INTERIM) are known. As responses to a status (STATUS) command, "not implemented" (NOT IMPLEMENTED), "rejected" (REJECTED), "in transition" (IN TRANSITION), and "stable" (STABLE) are known. As responses to a command for inquiring the presence/absence of a support of a command from the outside (GENERAL INQUIRY and SPECIFIC INQUIRY), "implemented" (IMPLEMENTED) and "not implemented" (NOT IMPLEMENTED) are known. As responses to a command for requiring that a change in status is notified to the outside (NOTIFY), "not implemented" (NOT IMPLEMENTED), "rejected" (REJECTED), "interim" (INTERIM), and "changed" (CHANGED) are known.

A subunit type is set to specify a function in a device. For example, a tape recorder/player, a tuner, or the like is assigned to the subunit type. A BBS (Bulletin Board Subunit) which is a subunit for publishing information to other devices is also assigned to the subunit type other than the functions corresponding to the devices. In order to perform discrimination when a plurality of subunits of the same type exist, addressing is performed by using subunit IDs as discrimination numbers. An opcode serving as a code of an operation represents a command, and an operand represents a parameter of the command. A field (dditional operands) added as needed is prepared. Zero data or the like is added after the operands as needed. Data CRC (Cyclic Reduncy Check) is used to check an error in data transmission.

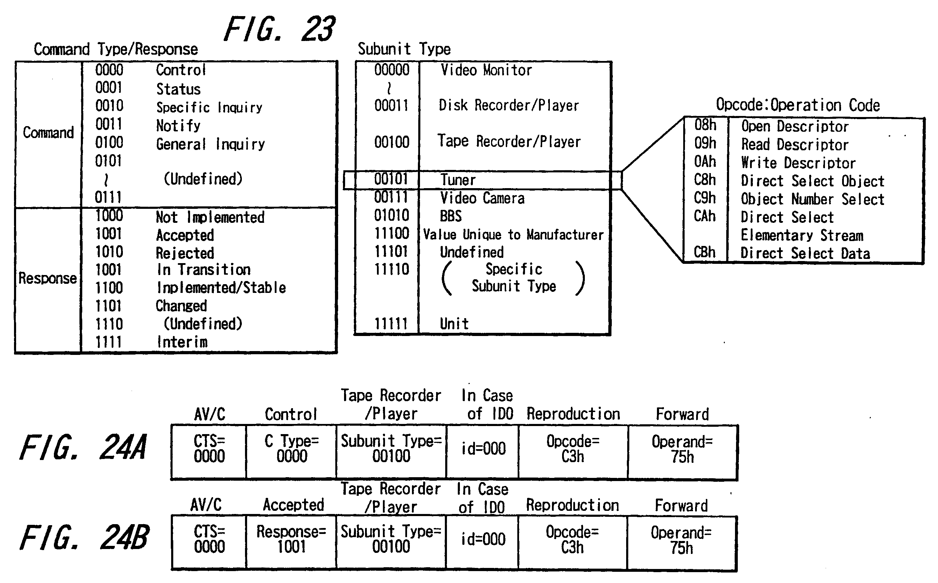

FIG. 23 shows a concrete example of an AV/C command. The left side in FIG. 23 represents a concrete example of the ctype/response. The upper stage in FIG. 23 represents a command, and the lower stage in FIG. 23 represents a response. Control (CONTROL) is assigned to "0000", status (STATUS) is assigned to "0001", specific inquiry (SPECIFIC INQUIRY) is assigned to "0010", notify (NOTIFY) is assigned to "0011", and general inquiry (GENERAL INQUIRY) is assigned to "0100". "0101 to 0111" are reserved and secured for a specification in the future. Not implemented (NOT IMPLEMENTED) is assigned to "1000", accepted (ACCEPTED) is assigned to "1001", rejected (REJECTED) is assigned to "1010", in transition (IN TRANSITION) is assigned to "1011", implemented/stable (IMPLEMENTED/STABLE) is assigned to "1100", changed (CHANGED) is assigned to "1101", and interim (INTERIM) is assigned to "1111". "1110" is reserved and secured for a specification in the future.

The center in FIG. 23 shows a concrete example of a subunit type. A video monitor is assigned to "00000", a disk recorder/player is assigned to "00011", a tape recorder/player is assigned to "00100", a tuner is assigned to "00101", a video camera is assigned to "00111", a subunit used as a bulletin board called a BBS (Bulletin Board Subunit) is assigned to "01010", a subunit type (Vender unique) unique to a manufacturer is assigned to "11100", and a specific subunit type (Subunit type extended to next byte) is assigned to "11110". Although a unit is assigned to "11111", "11111" is used when data is transmitted to a device itself, e.g., when a power supply is turned on or off.

The right side in FIG. 23 shows a concrete example of an opcode (operation code: opcode). The table of the opcode exists for each subunit type. Here, the opcode is obtained when the subunit type is a tuner. An operand is defined every opcode. In this case, an open descriptor for instructing that the descriptor is opened is set for "08h", a read descriptor for instructing that the descriptor is read is set for "09h", and a write descriptor for instructing that the descriptor is written is set for "0Ah". A direct select object is defined for C8h", an object number select is defined for C9h", a direct select elementary stream is defined for CAh", and direct select data is defined for CBh". With respect to other values, various functions are defined.

FIG. 24 shows a concrete example of an AV/C command an a response. For example, when reproduction instruction is performed to a reproduction device serving as a target (consumer), a controller transmits a command as shown in FIG. 24A to the target. This command satisfies CTS = "0000" because the AV/C command set is used. Since a command (CONTROL) for controlling a device from the outside is used for ctype, ctype = "0000" is satisfied (see FIG. 23). Since the subunit type is a tape recorder/player, subunit type = "00100" is satisfied (see FIG. 23). Id represents a case of ID0, and satisfies id = 000. The opcode becomes "C3h" which means reproduction. The operand is "75h" which means forward (FORWARD). When reproduction is performed, the target returns a response shown in FIG. 24B to the controller. Here, since "accepted" is set in the response, response = "1001" is satisfied (see FIG. 23). Since FIG. 24B is the same as FIG. 24A except for the response, a description thereof will be omitted.

The data transmission based on AV/C command is performed in the system of the example, and the process which recognize the device connected to the bus 1 will be described.

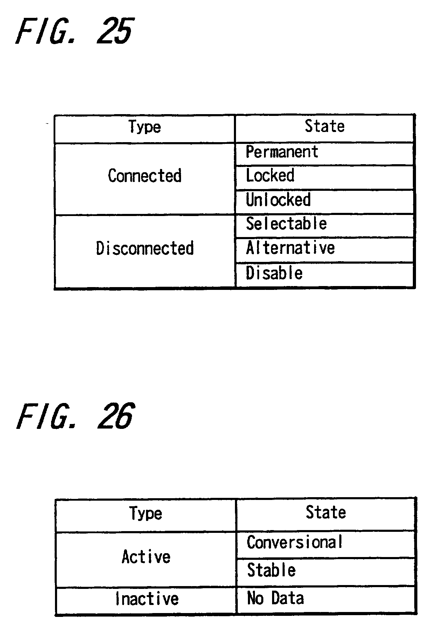

In this example, as a state related to a node, a state in which response of data shown in FIG. 25 is performed by a command is set. More specifically, when a connection state [Connected] is set, any one of responses representing that a node is fixed to be always connected [Permanent], a response representing a state in which the node is connected by any response such as in recording and cannot be disconnected temporarily [locked], and a response representing a normal connection which is not locked [Unlocked] is used. When a disconnected state [Disconnected] is set, a response representing that a node is not connected, but can be connected without hindering another connection by a request [Selectable], a response representing that, although a node is not connected, but can be connected by a request, when the connection is performed, the connection hinders another connection (more specifically, another connection may be disconnected) [Alternative], and a response representing that a node cannot be connected [Disable] are used.

As a signal input/output state, a response is defined as shown in FIG. 26. More specifically, in a state in which a signal can be output, any one of [Conversionable] representing that, when designation is performed to a plug on the output side (downstream of a flow of a signal) of a node, the format of the signal can be converted and [Stable] representing that a normal signal can be flowed is shown. In this case, the state of a node is the type of the connection state [Connected], a signal can be actually flowed. In addition, a signal cannot be flowed, [No data] representing that the signal cannot be flowed is shown.

This command is designed such that, when another device performs an inquiry, the inquiry can be performed such that the necessary description is closed up. More specifically, only a state related to a specific format is inquired by a status command, and a response can be requested. Only a state related to a specific plug is inquired by a status command, and a response can be requested. In addition, only a state related to a specific internal functional unit (subunit) is inquired by a status command, and a response can be required.

For example, in order to know a state related to a device which outputs the MPEG format with respect to the devices which have the configurations shown in FIGS. 13 to 15, [Source] which is an output and a format [MPEG] are inquired, and a response in which an entry ID includes states 1 and 5 can be obtained. In order to know all the states for a functional unit (Subunit B), [All] representing all and [Subunit B] are inquired, and a response in which an entry ID includes states 3, 4, 5, 9, 10, and 11 can be obtained.

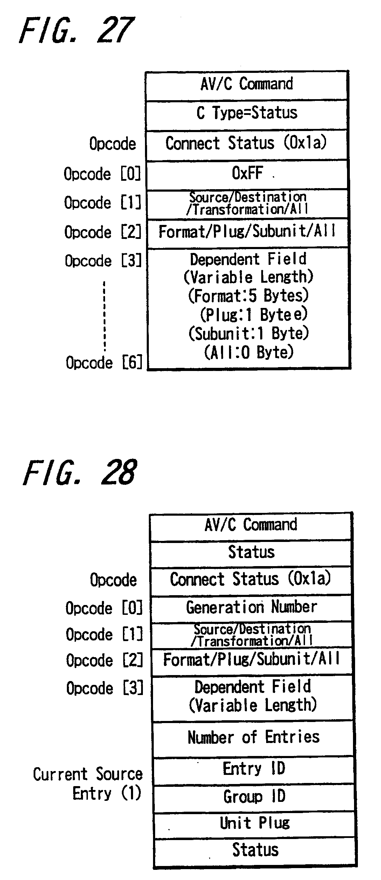

FIG. 27 is a diagram showing a configuration of a status command which inquires about a connection, and FIG. 28 is a diagram showing a configuration of a status response for the command. As a status response, the response having the configuration shown in FIG. 28 is repeatedly arranged a plurality of times in a transmission packet until all corresponding items are replied.

As shown in FIG. 27, in this embodiment, when a command is transmitted, specific data "OxFF" is set in a section of [operand] 0, and [generation number] is replied in the response as shown in FIG. 28. This shows whether a change is performed after an inquiry is performed. Basically, even one of all the entry IDs changes in status, one [generation number] is updated. When this [generation number] is fixed to, e.g., 1-byte value, count is performed from 0 to OxFF (= 255), and the count value returned to 0 again. Count values may be set in three states [Source], [Destination], and [Transformation]. As described above, a state change is represented by a count value, so that determination can be easily performed on the side on which an inquiry is performed.

The respective devices have tables related to connection states in the devices, the tables are used as the forms of descriptors of the AV/C command, and the descriptors can be read according to the AV/C command. Therefore, the states of the devices can be read for a short period of time by a small number of processes.

In the data (data of the lowest stage in FIG. 28) of the status represented by the response shown in FIG. 28, two status, i.e., a connection state of a plug and a state of a signal transmitted by the connection are shown. More specifically, for example, in the first half section of the data of the status, the data of the status related to nodes shown in FIG. 25 in advance is arranged and in the second half section of the data of the status, the data of a signal input/output state shown in FIG. 26 in advance is arranged. In this manner, two states, i.e., a node and an output state of a signal can be performed.

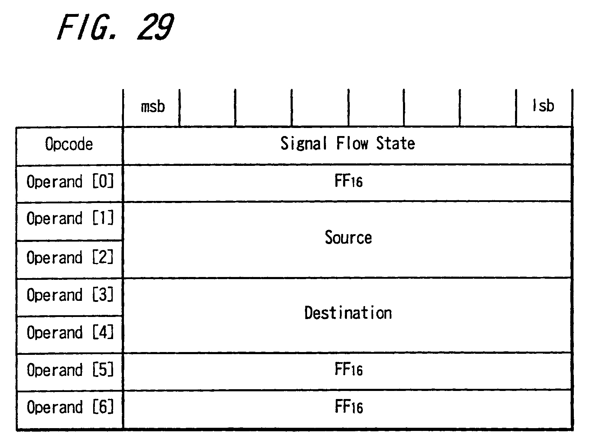

The second embodiment of the present invention will be described below with reference to FIGS. 29 to 37.

Also in this embodiment, as the configuration of a network system, for example, the same system as the system in FIG. 3 described in the first embodiment described above is applied. The system is applied to a configuration in which a plurality of devices are connected through an IEEE1394 bus serving as a digital communication control bus. In this embodiment, for example, as shown in FIGS. 13 to 15 in the first embodiment, a process performed when the configuration of a device (unit) 10 and data obtained by listing respective functions corresponding to the configuration are transmitted to another device connected to the bus is performed by a process different from the process in the first embodiment. More specifically, in the first embodiment described above, data which are listed to be a table are transmitted to a destination device at once by a descriptor based on the AV/C command. However, in this embodiment, only necessary data is transmitted to the destination device by a request from the destination device.

FIG. 29 is an example of a command (signal flow state command) transmitted from a destination device connected by the bus to check a signal transmission state in this embodiment. In this example, the data of a command serving as a command [SIGNAL FLOW STATE] for checking a connection state and a signal transmission state is transmitted in a section of [opcode], "FF" which is data (i.e., data obtained by continuing 1 data) of the maximum value is transmitted in a section of [operand] 0, data for specifying transmission (Source) is transmitted in sections of [operand] 1 and [operand] 2, and data for specifying reception (Destination) is transmitted in sections of [operand] 3 and [operand] 4. In another operand, for example, the data of the maximum value is arranged.

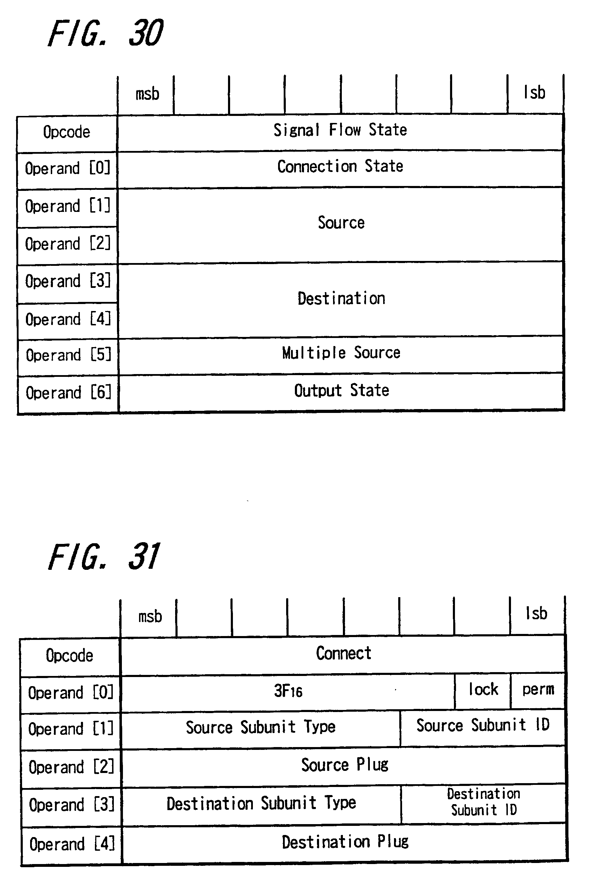

In this example, since the transmission state of the corresponding device is only inquired, as data for specifying reception (Destination), for example, the data of the maximum value is arranged. As data for specifying a source using the segments [operand] 1 and [operand] 2, for example, as a command for inquiring only a destination device connected by a bus, the same arrangement as that of source data in the command (connect command) which is regulated by the AV/C command in advance is used. More specifically, in the connect command which is regulated in advance, as shown in FIG. 31, by using 5 bits of the first half of the section of [operand] 1, data for specifying a source subunit type is arranged. By using 3 bits of the second half of the section, data for specifying a source subunit ID is arranged. By using 8 bits of the section of [operand] 2, data for specifying a source plug is arranged.

In the connect command which is regulated in advance and shown in FIG. 31, by using 5 bits of the first half of the section of [operand] 3, data for specifying a destination subunit type is arranged. By using 3 bits of the second half of the section, data for specifying a destination subunit ID is arranged. By using 8 bits of the section of [operand] 4, data for specifying a destination plug is arranged, so that a reception side can also be specified. In addition, in the section of [operand] 0, data related to the details of a connection state (data representing whether a locked connection is set or not) is arranged.

Returning to the description of the configuration of the signal flow state command of the example shown in FIG. 29, data configurations in sections for specifying the sources of [operand] 1 and [operand] 2 of the signal flow state command are set to be the same data configurations as those in the sections of [operand] 1 and [operand] 2 of the connect command shown in FIG. 31. To a specific device, data for specifying a subunit in the device and a source plug (output plug) are transmitted. The connection state between the subunit and the output plug is inquired.

In the device which receives the signal flow state command, a signal flow state response which is a response to the command is transmitted to the bus. FIG. 30 is a diagram showing a configuration of a signal flow state response for performing a response of data inquired by the command in a device which receives the signal flow state command. In the section of [opcode] of the response, data of [SIGNAL FLOW STATE] representing that the response is a response related to commands of a connection state and a signal transmission state is transmitted. Data representing the connection state (connection state) is arranged in the section [operand] 0, data for specifying transmission (Source) is transmitted in the sections [operand] 1 and [operand] 2, data for specifying reception (Destination) is transmitted in the sections of [operand] 3 and [operand] 4, data of a multiple source (multiple source) serving as data when a plurality of signal sources exist is transmitted in the section of [operand] 5, and data representing an output state (output state) is arranged in the section of [operand] 6. In this case, as the data in the sections [operand] 1 to [operand] 4, the data added to the commands are directly returned. The data of the connection state in the section of [operand] 0 and the data of the output state in the section of [operand] 6 are data representing the connection state and the signal transmission state.

In a device which transmits a signal flow state command, when the signal flow state response shown in FIG. 30 is received, a connection state and a signal transmission state of a corresponding portion can be determined on the basis of the data of the connection state of the section of [operand] 0 and the data of the output state arranged in the section [operand] 6.

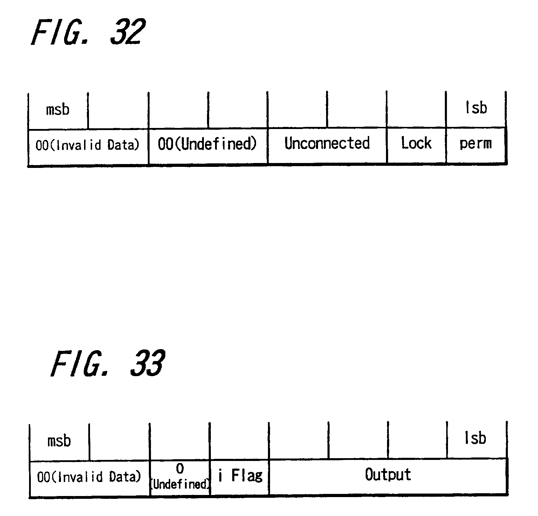

Data representing a connection state in the section of [operand] 0 of the signal flow state response shown in FIG. 30 has, e.g., a data configuration shown in FIG. 32. The two upper bits of the data constituted by 8 bits are undefined data. In this case, "00" is arranged. In this 2-bit section, when any data is arranged on the reception side, the data is ignored data. The section is designed such that any data is defined in the section without any obstruction in the future.

In the next 2-bit section, undefined data is set. In this case, "00" is arranged. In the 2-bit section, unused data (reserved data) which is effective only when data "00" is set on the reception side is set.

In the next 2-bit section, any one data of states related to the connection state [Connected] shown in FIG. 25 and the disconnection state [Disconnected] shown in FIG. 25 is arranged. In an example in FIG. 32, data [Unlocked] representing a normal unlocked connection is arranged. In addition, in the next 1-bit section, data [lock] representing the lock state of the connection at this time is arranged. In the last 1-bit section, data [perm] representing whether the connection at the time is a permanent connection is arranged.

Data representing the output state in the section of [operand] 6 of the signal flow state response shown in FIG. 30 has, e.g., a data configuration shown in FIG. 33. The two upper bits of the data constituted by 8 bits are undefined data (ignored data) which are ignored on the reception side. In this case, "00" is arranged.

In the next 1-bit section, as unused data (reserved data) which is effective only when 0 data is set, "0" is arranged.

In the next 1-bit section, a flag (i flag) related to a display is set. This flag is a flag representing that, when an output for performing an on-screen display (OSD) display is designated to a subunit for a display panel for displaying an operation state of, e.g., a device with display of characters and numbers to superpose any display on a, video image output in an isochronous mode or to superpose any display on a video image output from an analog output terminal, the display is performed by an output video image from a corresponding output plug (output terminal).

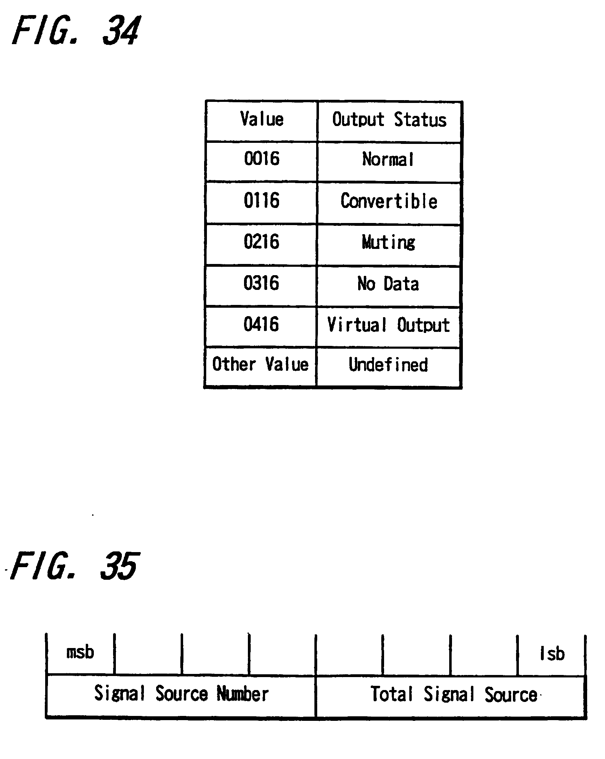

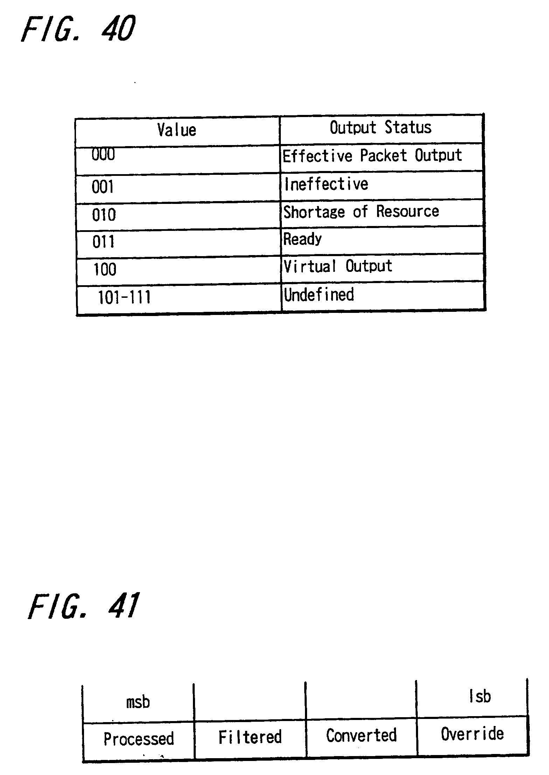

In the remaining 4-bit section, data representing an output state (output state) is arranged. As the data of the output state, for example, as shown in FIG. 34, the state and a value are set. More specifically, a normal output state (normal), a state (convertible) in which a data format is converted to output data, an output state (muting) of a signal set in a silent state, an output (no data) in a state in which no video image exists, a state (virtual output) in which an isochronous transfer plug is prepared, and other states (reserved) are prepared.

When the details of an output state are notified to a device on the destination side with the above configuration, the device which receives the data can determine the state of the received data. In particular, a flag for performing an on-screen display is arranged, an output plug which performs an on-screen display is determined, and video data from a specific output plug incorporated in, e.g., the device is received and displayed, so that it can be determined whether an on-screen display of the operation state of the corresponding device can be performed or not. Some device cannot easily perform an on-screen display of digital video data output in an isochronous mode. The on-screen display may be performed from only an output signal from a specific output unit (output plug) such as an analog output terminal. In such a case, a determination for performing an appropriate display in a device on the reception side can be performed.

A multiple source which is data when a plurality of signal sources exist in the section of [operand] 5 of the signal flow state response shown in FIG. 30 has, e.g., a data configuration shown in FIG. 35. More specifically, the 4 upper bits of the data constituted by 8 bits are set to be data (signal source number) of one source number of the plurality of signal sources (sources), and the 4 lower bits are set to be data (total signal source) of the total number of signal sources.

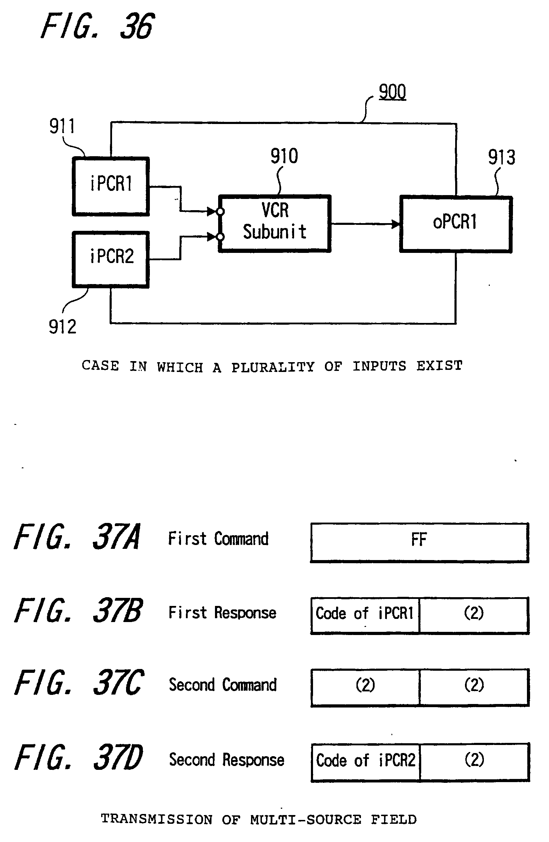

Data related to the plurality of signal sources is used when a corresponding device has the configuration shown in FIG. 36. More specifically, in a subunit 910 incorporated in a device (unit) 900, the data is used when the process of synthesizing input data from two input plugs 911 and 912 to output the input data from one output plug 913. In this case, as the synthesizing process in the subunit 910, for example, a synthesizing process performed by a video edition process or the like in which two video data are synthesized into one video data, a synthesizing process in which, to video data from one input, audio data from the other input is added, or the like may be used.

When the synthesizing process shown in FIG. 36 is performed, for example, data transmission shown in FIG. 37 is performed by using the section of [operand] 5 of the signal flow state response. More specifically, when a command is transmitted from a device the state of which the device wants to know first, as shown in FIG. 37A, data "FF" of the maximum value is arranged in this section. In the first response to the command, as shown in FIG. 37B, as the data of the source number of the first half, the code number of the input plug 911 (iPCR1) serving as one input plug of the plurality of plugs is arranged, and input number 2 is arranged as the data of the total number of signal sources of the second half.

As shown in FIG. 37C, when the second command is transmitted, the device on the reception side wants to know another input plug. For this reason, as data in the corresponding section (section of [operand] 5), 2 is arranged as the data of the source number, and an input number 2 is arranged as the data of the total number of signal sources. As a response to this command, as shown in FIG. 37D, as the data of the source number, the code number of the input plug 212 (iPCR2) serving as another input plug is arranged, and input number 2 is arranged as the data of the total number of signal sources.

When the data transmission related to the multiple source is performed as described above, and when, in a device which outputs data, data from another device is synthesized and output, the details related to the synthesis can be recognized by the device on the reception side.

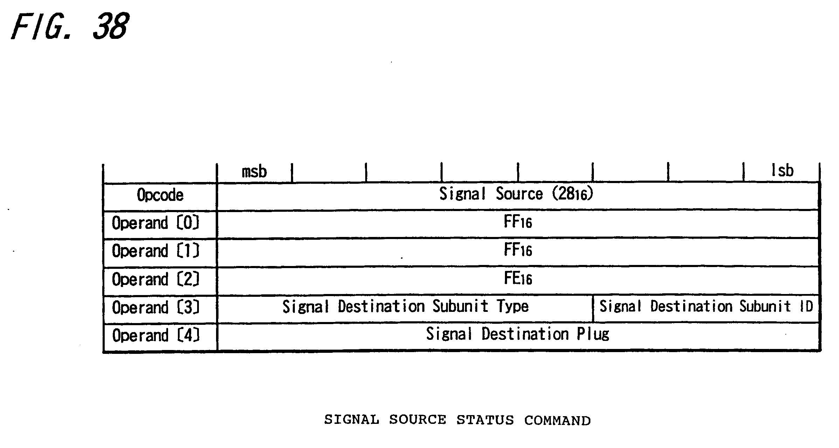

Third embodiment of the present invention will be described below with reference to FIG. 38 to FIG. 41.

Also in this embodiment, as the configuration of a network system, for example, the same system as the system in FIG. 3 described in the first embodiment described above is applied. The system is applied to a configuration in which a plurality of devices are connected through an IEEE1394 bus serving as a digital communication control bus. In this embodiment, for example, as shown in FIGS. 13 to 15 in the first embodiment, a process performed when the configuration of a device (unit) 10 and data obtained by listing respective functions corresponding to the configuration are transmitted to another device connected to the bus is performed by a process different from the processes in the first embodiment and the second embodiment. More specifically, in the second embodiment described above, a flag for notifying the details of an output state of a video image to a device on a destination side is prepared. However, in the third embodiment, a specific field representing a processing state of an output video image is prepared in data related to the video image to notify the details of the processing state of the video image to the destination with the data in this field.

FIG. 38 is an example of a command (signal source status command) transmitted from a destination device (in this case, a destination device which receives a video image) connected by the bus to check a signal output state in this embodiment. In this example, the data of a status command of [SIGNAL SOURCE] serving as a command for inquiring of a source device about a signal state is transmitted in a section of [opcode], "FE" which is invalid data (i.e., Data are ignored on the reception side) of is transmitted in sections of [operand] 0, [operand] 1, and [operand] 2, data of a subunit type (signal destination subunit type) of the destination device and data of a subunit ID (signal destination subunit ID) of the destination device are transmitted as data for specifying reception (Destination) in a section of [operand] 3, and data (signal destination plug) for specifying an input plug of the destination device is transmitted in a section of [operand] 4.

When a device except for the destination device checks a signal output state, as data related to the destination device, for example, the data of the maximum value may be arranged.

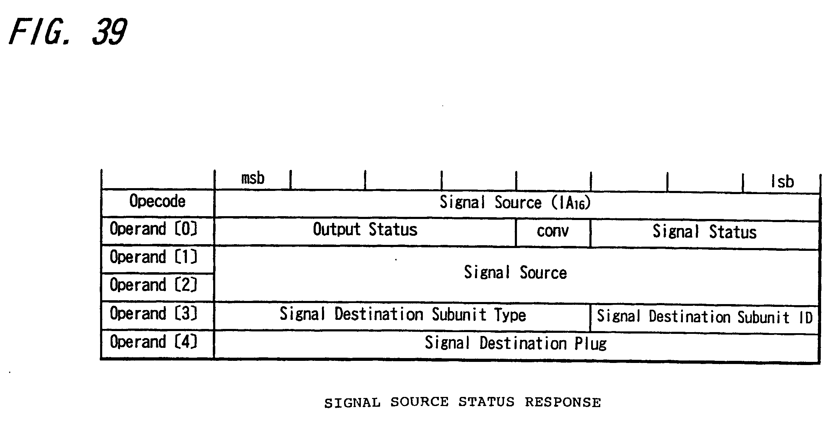

FIG. 39 shows an example of a response (signal source status response) to the status command. In this example, data of a status command (response) of [SIGNAL SOURCE] which is a response obtained when a source device is inquired about a signal state is transmitted in the section of [opcode], a field (3-bit section of the head) of data (output status) related to the output state of a signal, a field (1-bit section) of data (conv) related the presence/absence of a signal conversion process, and a field (4-bit section of the second half) of data (signal status) related to a signal processing state are prepared in the section of [operand] 0. Data related to states in a present source device in the respective fields are transmitted. In the sections [operand] 1 and [operand] 2, data (signal source) related to a signal source of an output signal (in this case, video data) is transmitted. In the sections of [operand] 3 and [operand] 4, data related to a destination device arranged in the command shown in FIG. 38 is directly returned.

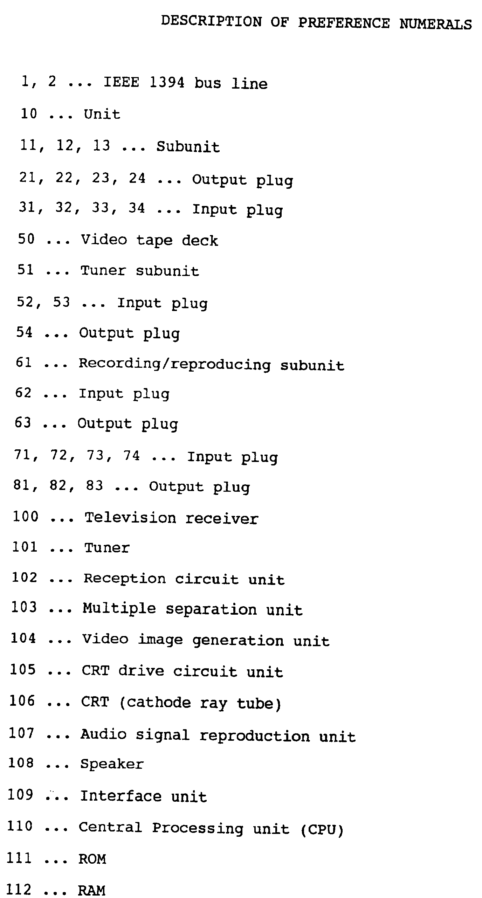

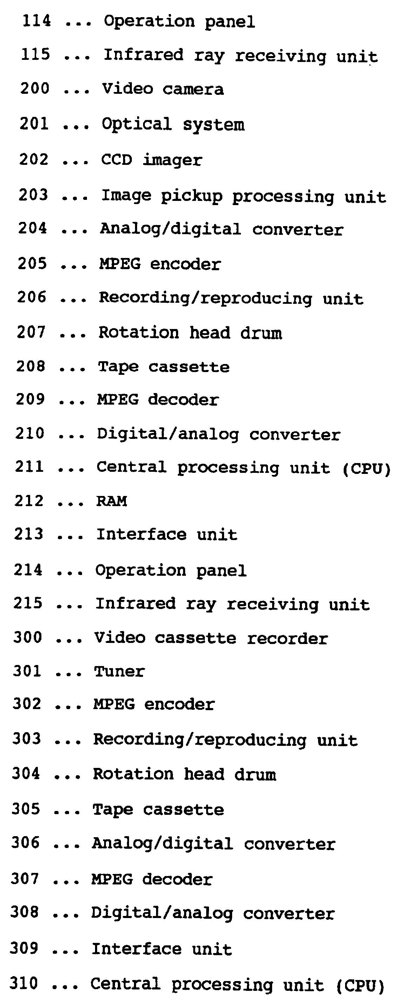

FIG. 40 shows an example of correspondence between meanings of 3-bit data of an output status in a section of [Operand] 0 of a signal source status response and data representing the output state. This example will be described below. Data "000" represents an effective packet output representing that effective packet data is output. Data "001" represents not effective representing that effective packet data is not output. Data "010" represents a state of shortage of resources representing a state that an output cannot be performed to a designated destination device because of a state that a connection extends to another destination device. Data "0011" represents ready representing a state that it is ready to transmit packet data. Data "0100" represents a state (here, this state is called a virtual output state) that data from another source device is output through the source device. Data "101" to "111" are not defined here.

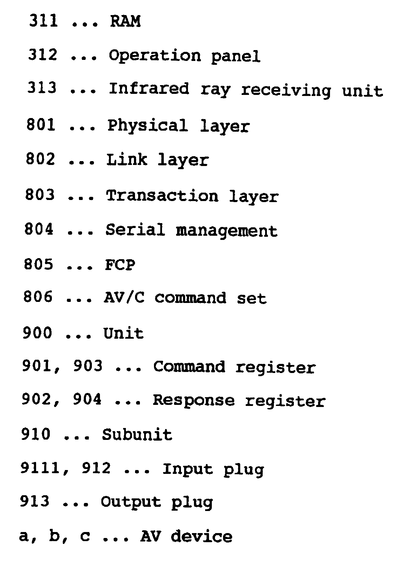

FIG. 41 shows an example of correspondence between meanings of 4-bit data of a signal status in a section of 0 [operand] of a signal source status response. Here, as the four bits, flags having respective meanings are set. From the uppermost bit side, the four flags, i.e., a flag of processed representing a processing state of video data, a flag of filtered representing a state that arbitrary data is selected from multiplexed video data, a flag of converted representing that a signal system of data such as video data is converted, and a flag of OSD override representing a state of an on-screen display for displaying multiplexed video images are set.

In the example described here, the processed flag represents that data from a source is directly output as data without being processed when the bit of the flag is "0", and represents that the data is processed when the bit is "1".

The filtered flag represents that arbitrary data is selected from multiplexed video data (e.g., data serving as a video image obtained by arranging a plurality of video images) from a source when the bit of the flag is "1", and represents that the selection is not performed when the bit is "0". The converted flag represents that a signal system of data is converted and output from a source when the bit of the flag is "1", and represents that the conversion is not performed when the bit is "0".

The flag of the OSD override represents that any information such as characters or graphics called an on-screen display (OSD) are processed to be superposed on a video image when the bit of the flag is "1", and represents that the process is not performed when the bit is "0".

Data representing a state that data obtained by mixing a plurality of data (e.g., a video image synthesized by inserting another object into one video image by a special process) may be added. Data representing that a special process except for the process described aboveis performed may be added.

In this manner, by using a specific field in a signal source status response, an output state of output data and the details of the processing state of the output data are represented. In this state, on a reception side of a response of a destination device or the like, the details of data (video data in this case) output from a source device can be known, and determination when data received by the destination device is processed can be easily performed. In addition, the field of data (conv) related to the presence/absence of a signal conversion process is set independently of the field of a signal processing state, and the destination device can also determine whether format conversion of video data or the like output from the source device is performed or not. The data shown in FIGS. 40 and 41 illustrates an example, and another data configuration may be employed.

In this embodiment, when a video image is transmitted from the source device to the destination device, pieces of information related to an output state of video data in the source device and the processing state of the output video data are transmitted to the destination device. However, when stream data except for video data is transmitted from the source device to the destination device, pieces of information of the output state and the processing state of the stream data may be transmitted by the same process as described above. For example, when audio data is output from the source device, pieces of information of the output state and the processing state may be transmitted in the same field.

In the first, second, and third embodiments described above, a case in which data transmission is performed in the format of the AV/C command in a network constituted by an IEEE 1394 bus is exemplified. However, the present invention can also be applied to a case in which data is processed by a network having another configuration or another format.

In each of the embodiments described above, pieces of information of a connection state between a subunit and an output unit (output plug) in the device and an output state are obtained by inquiry from another device. However, pieces of information of a connection state between an input unit (input plug) and a subunit of a device and an input state may be obtained such that inquiry is performed by the same command as described above.

## Claims

1. A device data transmission method for transmitting data related to a device connected to a predetermined bus line through the bus line, wherein
pieces of connection information which are connectable in the device are held at once as a predetermined table,
all or part of the pieces of connection information in the held table are transmitted to another device as a command of a predetermined format through the bus line.

2. The device data transmission method according to claim 1, wherein
the pieces of connection information held in the table include information related to a connection between an input unit and an output unit and an internal function processing unit held by the device and information related to a format and input or output by the device.

3. The device data transmission method according to claim 2, wherein
the information held in the table and related to the connection between the input unit or the output unit and the function processing unit includes information related to a fact that the same data can be transmitted by a plurality of connections at once.

4. The device data transmission method according to claim 2, wherein
the pieces of connection information held in the table further include information related to a function of converting a format for inputting and outputting into another format.

5. The device data transmission method according to claim 2, wherein
an input unit or an output unit indicated by information held in the table include units except for an input unit or an output unit connected to the bus line.

6. The device data transmission method according to claim 2, wherein
information related to a present connection state in the device is transmitted to another device by transmission of the command of a predetermined format.

7. The device data transmission method according to claim 6, wherein,
when a present connection state is changed, if another connection is influenced, information related to the change in the present connection state is further transmitted.

8. A device data transmission method for transmitting data related a first device connected to a predetermined bus line to a second device through the bus line, wherein
data for designating an input of an output unit or an internal function processing unit held by the first device is transmitted from the second device by a command of a predetermined format,
so that data related to a status of connection between two units of the corresponding input unit, output unit, and internal function processing unit of the first device is transmitted to the second device.

9. The device data transmission method according to claim 8, wherein
data for designating the input unit held by the first device is transmitted to the second device.

10. A device data transmission method for transmitting data related to a first device connected to a predetermined bus line to a second device through the bus line, wherein
data for designating an output unit or an internal function processing unit held by the first device is transmitted from the second device by a command of a predetermined format,
so that data for specifying a signal source of the data transmitted by the corresponding connection is transmitted to the second device.

11. The device data transmission method according to claim 10, wherein
when a plurality of signal sources exist, data related to the plurality of signal sources is transmitted.

12. The device data transmission method according to claim 10, wherein
data representing that a plurality of signal sources exist is transmitted.

13. The device data transmission method according to claim 8, wherein
data for designating the input unit or the output unit and the function processing unit has a data structure equal to that of data used when a setting related to a connection between the input unit or the output unit and the function processing unit is performed.

14. A device data transmission method for transmitting data related to a predetermined device connected to a predetermined bus line to another device through the bus line, wherein
data related to an output state of a video image from a specific output unit of the predetermined device is output from the predetermined device.

15. The device data transmission method according to claim 14, wherein
to the data related to the output state of the video image, a flag representing that a specific video image is superposed on the video image is added.

16. A device data transmission method according to claim 15, wherein
the specific video image represented by the flag is a video image of an on-screen display.

17. The device data transmission method according to claim 14, wherein
a processing state of the video image is represented by the specific field of data related to an output state of the video image.

18. The device data transmission method according to claim 17, wherein
a processing state of the video image is represented by using a flag.

19. The device data transmission method according to claim 17, wherein
a processing state represented by data in the specific field is data representing a state that predetermined data is extracted from multiplexed video data.

20. The device data transmission method according to claim 17, wherein
a processing state represented by data in the specific field is data representing a state of an on-screen display for displaying data on which a video image is superposed.

21. The device data transmission according to claim 17, wherein
a processing state represented by data in the specific field is data representing a state that a signal format of video data is converted.

22. The device data transmission method according to claim 17, wherein
a processing state represented by data in a specific field is data representing a state that a special process is performed to a video image.

23. The device data transmission method according to claim 22, wherein
the state that a special process represented by data in a specific field is performed is a state that video images mixed.

24. The device data transmission method according to claim 17, wherein
a processing state represented by data in the specific field is data representing a state that the same video image as that of a signal source is set.

25. A transmission device which can be connected to another device through a predetermined bus line, comprising:
storage means for holding pieces of connection information which are connectable in the device at once as a predetermined table; and
transmission control means for transmitting part or all of the pieces of connection information stored by the storage means to the bus line on the basis of a command of a predetermined format received through the bus line.

26. The transmission device according to claim 25, wherein
the pieces of connection information held in the storage means include information related to a connection between an input unit or an output unit and an internal function processing unit held by the device and information related to a format and input or output by the device.

27. The transmission device according to claim 26, wherein
information related to a connection between an input unit or an output unit and a function processing unit held by the storage means and includes information related to a fact that the same data can be transmitted by a plurality of connections at once.

28. The transmission device according to claim 26, wherein
pieces of connection information held in the storage means further include information related to a function of converting the format for inputting and outputting into another format.

29. The transmission device according to claim 26, wherein
an input unit or an output unit represented by information held in the storage means includes a unit except for an input unit or an output unit connected to the bus line.

30. The transmission device according to claim 26, wherein
the transmission control means transmits information related to a present connection state in the device to another device by transmission of a command of a predetermined format.

31. The transmission device according to claim 30, wherein
when a present connection state is changed, if another connection is influenced, the information transmitted by the transmission control means includes information related to the change in the present connection state.

32. A transmission device which can be connected to another device through a predetermined bus line comprising:
transmission control means for, when data for designating an input of an output unit held by the device or an internal function processing unit is received through the bus line, transmitting data related to a status of connection between two units of the corresponding input unit, output unit, and internal function processing unit.

33. The transmission device according to claim 32, wherein
the transmission control means transmits data for designating an input unit held by the device to the bus line.

34. A transmission device which can be connected to another device through a predetermined bus line, comprising
transmission control means for, when data for specifying a signal source of an input of an output unit or an internal function processing unit held by the device is received through the bus line, transmitting the data for specifying the signal source to the bus line.

35. The transmission device according to claim 34, wherein
when a plurality of signal sources exist, the transmission control means transmit data related to the plurality of signal sources.

36. The transmission device according to claim 34, wherein
when a plurality of signal sources exist, the transmission control means transmit data representing that the number of signal sources is plural.

37. A transmission device which can be connected to another device through a predetermined bus line, comprising:
transmission control means for transmitting data related an output state of video data from an output unit held by the device to the bus line.

38. The transmission device according to claim 37, wherein
the transmission control means adds a flag representing that a specific video data is superposed on a video data.

39. The transmission device according to claim 38, wherein
the specific video data represented by a flag added by the transmission control means is video data of an on-screen display.

40. The transmission device according to claim 37, wherein
the transmission control means arranges data representing a processing state of a video image in a specific field of data related to an output state of a video image.

41. The transmission device according to claim 40, wherein
the data in the specific field arranged by the transmission control means is data representing a state that predetermined data is extracted from multiplexed video data.

42. The transmission device according to claim 40, wherein
the data in the specific field arranged by the transmission control means is data representing the state of an on-screen display for displaying a superposed video image.

43. The transmission device according to claim 40, wherein
the data in the specific field arranged by the transmission control means is data representing a state that a signal format of video data is converted.

44. The transmission device according to claim 40, wherein
the data in the specific field arranged by the transmission control means is data representing a state that a special process is performed to the video image.

45. The transmission device according to claim 44, wherein
the state that the special process represented by the data in the specific field arranged by the transmission control means is performed is a state that video images are mixed.

46. The transmission device according to claim 40, wherein
the data in the specific field arranged by the transmission control means is data representing that a state of the output video image is just equal to that of the video image of the signal source.

47. A transmission system in which a first device and a second device are connected to each other through a predetermined bus line, comprising:
as the first device,
storage means for holding pieces of connection information which are connectable in the first device at once as a predetermined table, and
transmission control means for transmitting part or all of the pieces of connection information stored by the storage means as a command of a predetermined format which is received through the bus line; and
as the second device, connection determination means for determining the pieces of connection information in the first device on the basis of data transmitted to the bus line.

48. The transmission system according to claim 47, wherein
the pieces of connection information held in the storage means of the first device include information related to a connection between an input unit or an output unit and an internal function processing unit held by the first device and information related to a format and input or output by the first device,
so that the second device can determine these pieces of information.

49. The transmission system according to claim 48, wherein
the information held in the storage means of the first device and related to the connection between the input unit or the output unit and the function processing unit includes information related to a fact that the same data can be transmitted by a plurality of connections at once,
so that the second device can determine these pieces of information.

50. The transmission system according to claim 48, wherein
the pieces of connection information held in the storage means of the first device further include information related to a function of converting a format for inputting and outputting into another format,
so that the second device can determine these pieces of information.

51. The transmission system according claim 48, wherein
an input unit or an output unit represented by the pieces of information held in the storage means of the first device includes a unit except for an input unit or an output unit connected to the bus line,
so that the second device determines these pieces of information.

52. The transmission system according to claim 48, wherein
the transmission control means of the first device transmits information related to a present connection state in the first device to the second device by transmitting a command of a predetermined format.

53. The transmission system according to claim 52, wherein
when the present connection state is changed, if another connection is influenced, information transmitted by the transmission control means of the first device includes information related to the change in the present connection state,
so that the second device can determine the change in the present connection state.

54. A transmission system in which a first device and a second device are connected to each other through a predetermined bus line, comprising:
as the first device,
transmission control means for, when data for designating an input of an output unit held by the first device or an internal function processing unit is received through the bus line, transmitting data related to statuses of connection between two units of the corresponding input unit, output unit, and internal function processing unit to the bus line; and
as the second device, connection determination means for determining pieces of connection information in the first device on the basis of data transmitted to the bus line.

55. The transmission system according to claim 54, wherein
the transmission control means of the first device transmits data for designating an input unit held by the device to the bus line, and
the connection determination means of the second device determines that the data is transmitted to the bus line.

56. A transmission system in which a first device and a second device are connected to each other through a predetermined bus line, comprising:
as the first device,
transmission control means for, when data for specifying a signal source of an input of an output unit held by the first device or an internal function processing unit is received through the bus line, transmitting the data for specifying the signal source to the bus line; and
as the second device, connection determination means for specifying a signal source on the basis of data transmitted from the first device.

57. The transmission system according to claim 56, wherein
when a plurality of signal sources exist, the transmission control means of the first device transmits data related to the plurality of signal sources, and
the connection determination means of the second device determines the plurality of signal sources.

58. The transmission system according to claim 56, wherein
when a plurality of signal sources exist, the transmission control means of the first device transmits data representing that the number of signal sources is plural, and
the connection determination means of the second device determines that the number of signal sources is plural.

59. A transmission system in which a first device and a second device are connected to each other through a predetermined bus line, comprising:
as the first device,
transmission control means for transmitting data related to an output state of video data from an output unit held by the first device to the bus line; and
as the second device, state determination means for determining the output state on the basis of data transmitted from the first device.

60. The transmission system according claim 59, wherein
the transmission control means of the first device adds a flag representing that a specific video data is superposed on a video data, and
the state determination means of the second device determines on the basis of the flag that the specific video data is superposed on the video data.

61. The transmission system according to claim 60, wherein
the specific video data represented by the flag added by the transmission control means of the first device is video data of an on-screen display, and
the state determination means of the second device determines that the specific video data is the video data of the on-screen display on the basis of the flag.

62. The transmission system according to claim 59, wherein
the transmission control means of the first device arranges data representing a processing state of a video image in a specific field of data related to an output state of a video image, and
the state determination means of the second device determines the processing state of the video image.

63. The transmission system according to claim 62, wherein
the data in the specific field arranged by the transmission control means of the first device is data representing a state that predetermined data is extracted from multiplexed video data, and
the state determination means of the second device determines a state that the predetermined data is extracted from the multiplexed video data.

64. The transmission system according to claim 62, wherein
the data in the specific field arranged by the transmission control means of the first device is data representing a state of an on-screen display for displaying a superposed video image, and
the state determination means of the second device determines the state of the on-screen display.

65. The transmission system according to claim 62, wherein
the data in the specific field arranged by the transmission control means of the first device is data representing a state that a signal format of video data is converted, and
the state determination means of the second device determines a state that the signal format of the video data is converted.

66. The transmission system according to claim 62, wherein
the data in the specific field arranged by the transmission control means of the first device is data representing a state that a special process is performed to a video image, and
the state determination means of the second device determines the state that the special process is performed to the video image.

67. The transmission system according to claim 66, wherein
the state that a special process represented by the data in the specific field arranged by the transmission control means of the first device is performed is a state that video images are mixed, and
the state determination means of the second device determines the state that the video images are mixed.

68. The transmission system according to claim 62, wherein
the data in the specific field arranged by the transmission control means of the first device is data representing that a state of the output video image is just equal to that of a video image of a signal source, and
the state determination means of the second device determines that the output video image is just equal to the video image of the signal source.
